# EUROPEAN PATENT SPECIFICATION

(11) **EP 4 326 407 B1**
(45) Date of publication and mention of the grant of the patent: **25.11.2026**
(21) Application number: 22792296.0
(22) Date of filing: 19.04.2022
(51) Int. Cl.: A63B 57/30, A63B 57/00, A63B 69/36, A63B 57/40, G03B 29/00, G03B 37/04, H04N 23/45, H04N 23/57

(54) **GOLF CAMERA ASSEMBLIES**
GOLFKAMERAANORDNUNGEN
ENSEMBLES CAMÉRAS DE GOLF

(30) Priority: 19.04.2021 US 202163176760 P; 21.09.2021 US 202163246606 P; 28.02.2022 US 202263314740 P; 30.03.2022 US 202263325308 P
(43) Date of publication of application: 28.02.2024
(60) Divisional application: 26210884.8 / 4 845 171
(73) Proprietor: EVZ Golf Group LLC, Houston, TX 77007 (US)
(72) Inventor: VAN ZANDT, Eric, Houston, Texas 77007 (US)
(74) Representative: Beck Greener LLP
(86) International application number: PCT/US2022/025305
(87) International publication number: WO 2022/225899

(56) References cited:
- WO-A1-2008/068499
- WO-A1-2008/068499
- KR-A- 20180 050 589
- KR-B1- 101 916 604
- SG-A1- 185 164
- SG-A1- 185 164
- US-A1- 2013 217 519
- US-B1- 8 398 500
- GOLFFLAGSTICK: "Golf Flagstick Camera", 5 April 2007 (2007-04-05), XP093235961, Retrieved from the Internet <URL:https://www.youtube.com/watch?v=zA1_vufJBak> [retrieved on 20241219]

## Description

Filming a sports event presents multiple challenges. Various cameras and camera angles may be called for to effectively capture a sports event, such as for instance a golf tournament or casual round of golf. In particular, much of a round of golf is executed in large open spaces, such as on the fairways of a golf course. However, some parts of the game of golf take place on relatively small areas on each hole of the golf course such as on the green, tee box, and/or around hazards or course boundary lines.

WO2008068499 discloses a flagpole, a golf flagstick in particular, having a camera.

According to an aspect of the present invention, there is provided a golf flagstick camera assembly as set out in the first of the appending independent claims. According to another aspect of the present invention, there is provided a method of capturing images of play on a golf course as set out in the second of the appending independent claims. Features of various embodiments are set out in the appending dependent claims.

Some embodiments disclosed herein are directed to a golf flagstick camera assembly. In some embodiments, the golf flagstick camera assembly includes a pole having a central axis, a first end, and a second end opposite the first end along the central axis. In addition, the golf flagstick camera assembly includes a plurality of camera assemblies coupled to the pole. The plurality of camera assemblies includes a first camera assembly and a second camera assembly axially spaced from one another along the central axis. The first camera assembly comprises a set of cameras that each have a viewing axis that is positioned at an acute angle α to the central axis. In addition, the second camera assembly comprises a set of cameras that each have a viewing axis that is positioned at an acute angle β to the central axis. Further, the angle α is greater than the angle β.

Some embodiments disclosed herein are directed to additional camera assemblies which may be used in combination with a golf flagstick camera assembly according to the appended claims. Such additional camera assemblies do not form part of the claimed invention except where they fall within the scope of the appended claims. In some embodiments, the method includes (a) positioning a camera assembly below a ground level of the golf course; (b) extending a camera of the camera assembly above the ground level; (c) capturing images of play on the golf course; and (d) retracting the camera back below the ground level after (c).

Some embodiments disclosed herein are directed to an upper camera assembly of a golf flagstick camera assembly. In some embodiments the golf flagstick camera assembly includes a pole having a central axis, a first end, and a second end opposite the first end along the central axis. In addition, the golf flagstick camera assembly includes a stab connector coupled to the second end that is configured to engage with a cup of a hole on a green of a golf course. Further, the golf flagstick camera assembly includes a drone camera assembly coupled to the first end. The drone camera assembly comprises a camera and a plurality of thrusters, and the drone camera assembly is configured to separate from the first end of the pole and hover over the golf course.

Embodiments described herein comprise a combination of features and characteristics intended to address various shortcomings associated with certain prior devices, systems, and methods. The foregoing has outlined rather broadly the features and technical characteristics of the disclosed embodiments in order that the detailed description that follows may be better understood. The various characteristics and features described above, as well as others, will be readily apparent to those skilled in the art upon reading the following detailed description, and by referring to the accompanying drawings.

The scope of protection is defined by the appended claims.

For a detailed description of various exemplary embodiments, reference will now be made to the accompanying drawings in which:
FIG. 1 is a side view of a flagstick camera assembly;
FIG. 2 is a schematic diagram of an upper camera of the flagstick camera assembly of FIG. 1;
FIGS. 3A and 3B are cross-sectional views of the flagstick camera assembly of FIG. 1 showing an upper camera assembly;
FIG. 4 is a perspective view of a charging station for the flagstick camera assembly of FIG. 1;
FIG. 5 is a side, cross-sectional view of a hole of the charging assembly of FIG. 4;
FIG. 6 is a cross-sectional view of a camera assembly installed within a hole on a green with the camera assembly in a collapsed position;
FIG. 7 is a cross-sectional view of the camera assembly of FIG. 6, with the camera assembly in an extended position;
FIG. 8 is a schematic diagram of a camera of the camera assembly of FIGS. 6 and 7;
FIG. 9 is a schematic diagram of an electronic device coupled to a plurality of the flagstick assemblies of FIG. 1 and a plurality of the camera assemblies of FIGS. 6 and 7;
FIG. 10 is a cross-sectional view of a camera assembly installed within a hole on a golf course in a collapsed position;
FIG. 11 is a cross-sectional view of the camera assembly of FIG. 10, with the camera assembly in an extended position;
FIG. 12 is a side view of a camera assembly installed on a hazard marker;
FIG. 13 is a schematic diagram of a drone camera assembly for use within the flagstick camera assembly of FIG. 1;
FIG. 14 is another schematic diagram of the drone camera assembly on the pole of the flagstick camera assembly of FIG. 1;
FIG. 15 is a side view of the flagstick camera assembly of FIG. 1;
FIG. 16 is an enlarged side cross-sectional view of an upper connection between an upper section and middle section of the flagstick camera assembly of FIG. 15; and
FIGS. 17 and 18 are side partial cross-sectional views of a camera assembly installed within the hole on a green.

The following discussion is directed to various embodiments. However, one of ordinary skill in the art will understand that the examples disclosed herein have broad application, and that the discussion of any embodiment is meant only to be exemplary of that embodiment.

The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. In addition, as used herein, the terms "axial" and "axially" generally mean along or parallel to a given axis (e.g., central axis of a body or a port), while the terms "radial" and "radially" generally mean perpendicular to the given axis. For instance, an axial distance refers to a distance measured along or parallel to the axis, and a radial distance means a distance measured perpendicular to the axis. Further, when used herein (including in the claims), the words "about," "generally," "substantially," "approximately," and the like, when used to refer to a stated value, mean within a range of plus or minus 10% of the stated value.

As used herein, the term "images" collectively refers to both still images and videos. Thus, if a camera (or other device or system) is said to capture "images," that camera (or other device or system) may capture both still images and videos (which may comprise a plurality of successive still images).

As previously described, the game of golf involves activities that occur in relatively large spaces (e.g., such as play from the tee box and fairways) and activities that occur in relatively small spaces (e.g., such as chipping, putting, and the like). Effectively capturing images of all of these activities can be a challenge when using mounted or carried cameras that are positioned at a distance from the hole (and likely also positioned entirely off the putting surface of the green or other area on the golf course).

Accordingly, embodiments disclosed herein include camera assemblies for capturing images of activities on a golf course, such as on the green or other areas. In some embodiments, the camera assemblies disclosed herein may be mounted to the flagstick that is inserted within the hole on a green of a hole of a golf course. In some embodiments, the camera assemblies disclosed herein may be placed in locations that are different and separate from the flagstick on the green. Regardless, through use of the camera assemblies disclosed herein, activities on a golf course may be captured from multiple angles to facilitate an enhanced viewing experience (e.g., either via a broadcast of a golf event on television, or as a private video).

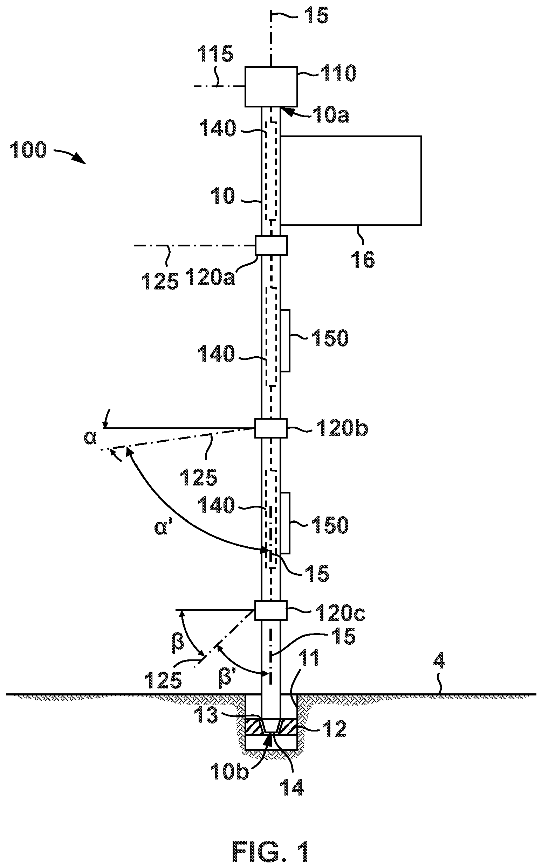

Referring now to FIG. 1, an embodiment of camera assembly 100 is shown according to some embodiments. As shown in FIG. 1, the camera assembly 100 is installed and/or incorporated within the flagstick installed within a hole 11 on the green (or "putting surface") 4 of a hole of golf. Thus, the camera assembly 100 may be referred to herein as a "flagstick camera assembly 100." Generally speaking, the flagstick camera assembly 100 comprises a central pole 10 (or more simply "pole 10") that is inserted within the hole 11 and that supports a number of cameras (or other suitable image sensors) for capturing images of the area surrounding the pole 10 in visible or non-visible light (e.g., infrared or "IR").

Pole 10 includes a central or longitudinal axis 15, a first or upper end 10a, and a second or lower end 10b spaced from upper end 10a along central axis 15. The lower end 10b comprises a male, stab connector 14 that is engaged in an aperture 13 defined in a cup 12 that is inserted within hole 11. The stab connector 14 may be referred to herein as a ferrule. Accordingly, when stab connector 14 is inserted within aperture 13 of cup 12, the central pole 10 may extend upward, out of hole 11 along central axis 15. A flag 16 is coupled to pole 10. Flag 16 may be positioned closer to upper end 10a than lower end 10b. Flag 16 may include a number designating the particular hole (e.g., numbers one through eight-teen), or any other suitable symbol of graphic.

In addition, flagstick camera assembly 100 includes a first or upper camera 110 positioned at (or near) upper end 10a of pole 10, and a plurality of second camera assemblies 120a, 120b, 120c coupled to pole, and positioned between ends 10a, 10b. In particular, the plurality of second cameras assemblies 120a, 120b, 120c may comprise a first or upper camera assembly 120, a second or middle camera assembly 120b, and a third or lower camera assembly 120c. The upper camera assembly 120a is positioned more proximate the upper end 10a than the middle camera assembly 120b and lower camera assembly 120c. In addition, the lower camera assembly 120c is positioned more proximate the lower end 10b than the upper camera assembly 120a and the middle camera assembly 120b. Further, the middle camera assembly 120b is positioned between the upper camera assembly 120a and the lower camera assembly 120c along the central axis 15. Embodiments of upper camera 110 and the plurality of camera assemblies 120a, 120b, 120c are now described in more detail below.

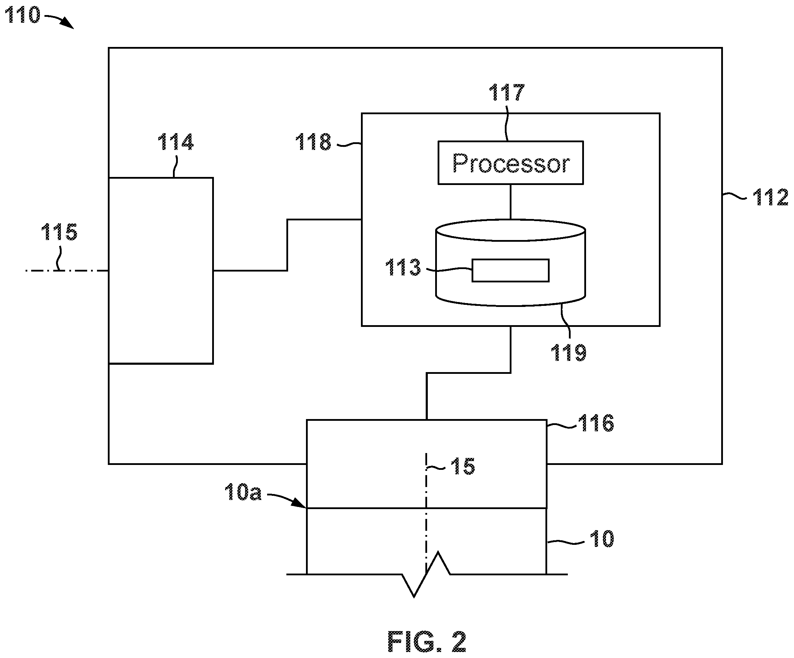

Referring now to FIG. 2, upper camera 110 comprises a housing 112, an image sensor assembly 114 supported by housing 112, an actuator 116 coupled to housing 112, and a controller 118 positioned within housing 112 and coupled to image sensor assembly 114 and actuator 116. The image sensor assembly 114 comprises one or more lenses and/or sensors for capturing images in visible light and/or non-visible light (e.g., IR light). Image sensor assembly 114 may include a view axis (or lens axis) 115 that defines the direction the image sensor assembly 114 is pointed, such that the view axis 115 may be positioned at the center of images that are captured by image sensor assembly 114, during operations. In some embodiments, the view axis 115 may extend perpendicularly or normally away from a center of an outer surface of a lens of the image sensor assembly 114.

Actuator 116 is configured to move the upper camera 110 to move the view axis 115 relative to central pole 10 during operations. In particular, actuator 116 may move the view axis 115 for upper camera 110 circumferentially about central axis 15 (e.g., such as a full 360° circumferentially about central axis 115) of central pole 10, and may also adjust an angle θ (FIG. 1) extending between central axis 15 and view axis 115 (e.g., along a plane containing the central axis 15). Thus, during the operations, the actuator 116 may move image sensor assembly 114 such that camera 110 may capture images omnidirectionally about the central pole 10. The actuator 116 may comprise aby suitable device or array of devices for inducing the omnidirectional movement of the view axis 115 and upper camera 110 during operations. For instance, actuator 116 may comprise a pair of electric motors that are configured to pivot the housing 112 of upper camera 110 about a pair of orthogonal axes. In some embodiments, actuator 116 may comprise one or more extendable/retractable cylinders (e.g., hydraulic cylinders, pneumatic cylinders, etc.).

Controller 118 (FIG. 2) may comprise a processor 117 and a memory 119. The processor 117 may comprise any suitable processing device, such as a microcontroller, central processing unit (CPU), graphics processing unit (GPU), timing controller (TCON), scaler unit. The processor 117 executes machine-readable instructions (e.g., machine-readable instructions 113) stored on memory 119, thereby causing the processor 117 to perform some or all of the actions attributed herein to the controller 118. In general, processor 117 fetches, decodes, and executes instructions (e.g., machine-readable instructions 113). In addition, processor 117 may also perform other actions, such as, making determinations, detecting conditions or values, etc., and communicating signals. If processor 117 assists another component in performing a function, then processor 117 may be said to cause the component to perform the function.

The memory 119 may comprise volatile storage (e.g., random access memory (RAM)), non-volatile storage (e.g., flash storage, read-only memory (ROM), etc.), or combinations of both volatile and non-volatile storage. Data read or written by the processor 117 when executing machine-readable instructions 113 can also be stored on memory 119. Memory 119 may comprise "non-transitory machine-readable medium," where the term "non-transitory" does not encompass transitory propagating signals.

The processor 117 may comprise one processing device or a plurality of processing devices that are distributed within controller 118 or more broadly within upper camera 110. Likewise, the memory 119 may comprise one memory device or a plurality of memory devices that are distributed within controller 118 or more broadly within upper camera 110.

Controller 118 may be coupled to image sensor assembly 114 and to actuator 116. Thus, during operations, controller 118 may cause actuator 116 to move housing 112 and image sensor assembly 114 as previously described above so as to capture images omnidirectionally about central pole 10. For instance, in some embodiments, processor 118 may move image sensor assembly 114, via actuator 116, to maintain an object within the field of view of image sensor assembly 114. Specifically, the controller 118 may recognize an object in the images captured by the image sensor assembly 114. For instance, controller 118 may recognize a golf ball rolling along the surfaces of the green 4 and/or approaching the green 4 from the air (e.g., as a result of a golf shot from the fairway, tee box, or other off-green location) within the image(s) captured by image sensor assembly 114 and may then cause actuator 116 to move housing 112 so as to place and maintain the object within the field of view (e.g., at or near the center of the field of view so that a projection of view axis 115 may intersect with the object) of the image sensor assembly 114. Accordingly, upper camera 110 may be configured to automatically track a moving object during operations. In some embodiments, controller 118 may utilize a machine leaning model (e.g., a neural network, logistic regression model, classification model, etc.) to detect and recognize objects (e.g., golf balls) in the images captured by image sensor assembly 114.

In some embodiments, controller 118 may cause actuator 116 to move the housing 112 to point the view axis 115 of image sensor assembly 114 down the fairway of the and/or toward the tee box of the golf hole. For instance, in some embodiments, controller 118 may cause actuator 116 to move the camera housing 112 to point view axis 115 toward the fairway and/or tee box if no objects (e.g., golf balls) are detected on or approaching the green 4 (e.g., after a preselected period of time such as for instance 5 seconds, 10 seconds, 30 seconds, 1 minute, etc.), and/or after detecting golfers exiting the green 4 (e.g., via the motion and object tracking techniques previously described above). Thus, during operations the view axis 115 may be pointed toward the most likely approach direction of a golf ball, such that controller 118 may detect an approaching golf ball thereafter. In some embodiments, the controller 118 may include or be coupled to a suitable communications device (e.g., an antenna) for communicating with a Global Positioning System (GPS), and may use information received via this communications device to determine the direction of the fairway or tee box for alignment of the view axis 115 as described above.

As will be described in more detail below, in some embodiments, the controller 118 may receive commands from a remote electronic device (e.g., computer, server, smartphone, etc.) to move the housing 112 and view axis 115 of upper camera 110 to a desired location (e.g., such as a portion or location on the green 4). Thus, controller 118 may have or be coupled to a suitable communications assembly (e.g., antenna) that may communicate with a network (e.g., a wireless network such as a wireless local area network (WLAN) wireless wide area network (WWAN), etc.).

In some embodiments, the upper camera 110 may comprise a gimbal-stabilized, actuatable camera. For instance, in some embodiments, the upper camera 110 may comprise an Osmo Pocket camera available from DJI of Los Angeles, California.

In some embodiments, the upper camera 110 may be coupled to the upper end 10a of pole 10 via a suitable linear actuator (not shown) that is configured to axially extend the upper camera 110 away from the upper end 10a along axis 15 during operations. Without being limited to this or any other theory, selective extension of the upper camera 110 may allow the upper camera 110 to achieve a better view of on or near green play (e.g., such as a chip from a position that is substantially downhill of the green 4). In some instances, extending the upper camera 110 axially upward (e.g., via the linear actuator) may also allow a player to see the location of the hole 11 for an otherwise "blind shot." In some embodiments, the linear actuator for extending the upper camera 110 axially away from upper end 10a of pole 10, may be integrated within the separate from actuator 116. Any suitable actuator may be used to axially extend upper camera 110 from upper end 10a of pole 10, such as, for instance, an extendable cylinder (e.g., hydraulic cylinder, pneumatic cylinder), electric motor, etc. In some embodiments, the linear actuator (not shown) may be configured to axially extend the upper camera 110 axially away from upper end 10a by approximately 5 to 7 ft.

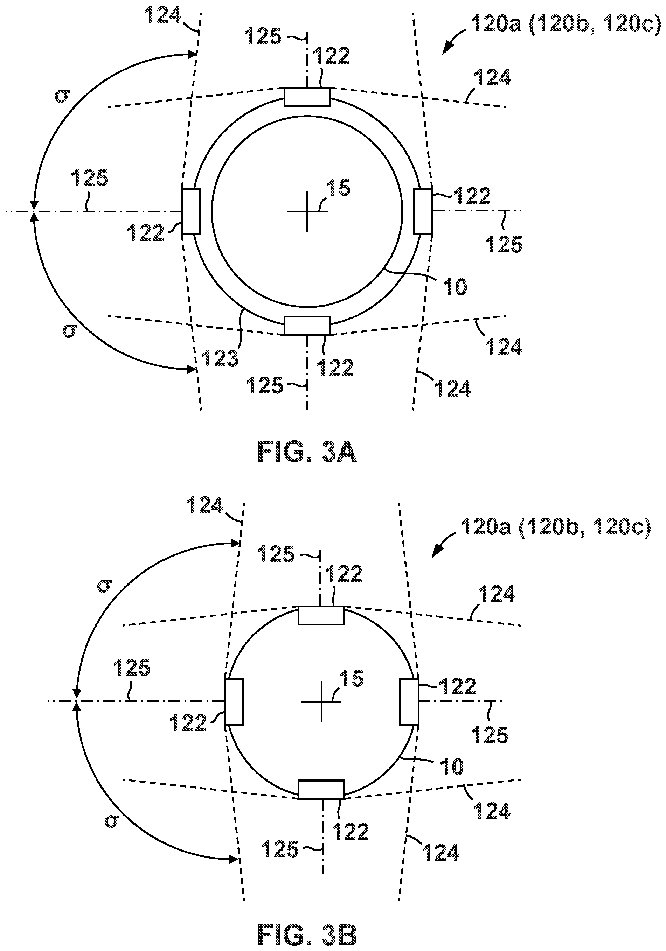

Referring now to FIG. 3A, upper camera assembly 120a is shown according to some embodiments. In the following description, features of the upper camera assembly 120a shown in FIG. 3A are described; however, it should be appreciated that in some embodiments, the middle camera assembly 120b and lower camera assembly 120c may be substantially the same (except as described herein). Thus, the following description may also be applied to describe specific features of the middle camera assembly 120b and lower camera assembly 120c according to some embodiments.

Upper camera assembly 120a, middle camera assembly 120b, and lower camera assemble 120c each includes a plurality of cameras 122 that are spaced circumferentially about central pole 10 with respect to central axis 15. In some embodiments, the cameras 122 may be uniformly circumferentially spaced about central pole 10 such that the plurality cameras 122 may comprise two cameras 122 circumferentially spaced approximately 180° from one another about axis 15, three cameras 122 circumferentially spaced approximately 120° from one another about axis 15, or four cameras 122 circumferentially spaced approximately 90° from one another about axis 15, etc. In some embodiments, one or more of the cameras 122 may comprise a Camera Module available from the Raspberry Pi Foundation of the United Kingdom.

Each of the plurality of cameras 122 may comprise a view axis 125 and a field of view 124 disposed about view axis 125. As with the view axis 115 of upper camera 110 (FIG. 2), the view axis 125 of each camera 122 may extend perpendicularly or normally outward from the center of an outer surface of a lens of the corresponding camera 122. In some embodiments, the cameras 122 may have a fixed view relative to pole 10 such that the view axes 125 may be fixed relative to central axis 15 of pole 10. The field of view 124 for each camera 122 extends to an angle σ on one or more (e.g., all) sides of view axis 125. In some embodiments, the angle σ may be less than or equal to 90°; however, in other embodiments, the angle σ may be greater than 90° so that cameras 122 have a relatively wide view. In some embodiments, the angle σ of the field of view 124 may be greater or lesser in different planes that include the view axis 125. For instance, the angle σ may be greater in a horizontally oriented plane (e.g., that generally extends perpendicularly to the direction of gravity) versus of vertically oriented plane.

As shown in FIG. 3A, the fields of view 124 of the plurality of cameras 122 may overlap in a plane extending radially through the central axis 15 (e.g., the plane of view for FIG. 3A). As a result, the plurality of cameras 122 may capture images about the entire 360° circumference of pole 10, and thereby may be positioned to capture images of persons or objects (e.g., golf balls) on the green 4 regardless as to where those persons or objects are positioned relative to the pole 10 on green 4.

The plurality of cameras 122 may be coupled to the pole 10 via a collar 123 that extends circumferentially about an outer surface of pole 10 with respect to central axis 15. In some embodiments, the collar 123 may comprise a flexible material that is adhered (or otherwise secured) to the outer surface of pole 10. In some embodiments, the collar 123 may comprise a rigid annular member that is secured to pole 10 (e.g., again to the outer surface of the pole). Referring briefly now to FIG. 3B, in some embodiments, the plurality of cameras 122 may be coupled to the pole by embedding or otherwise incorporating the cameras 122 within pole 10.

Referring now to FIGS. 1 and 3A, when the flagstick camera assembly 100 is installed in cup 12 of hole (e.g., as shown in FIG. 1), the view axes 125 of the plurality of cameras 122 (FIG. 3A) within the upper camera assembly 120a, middle camera assembly 120b, and lower camera assembly 120c may be positioned at different angles to the horizontal direction. As used herein, the phrase "horizontal direction" refers to a direction that is perpendicular to the direction of gravity.

Specifically, as shown in FIG. 1, again when the flagstick camera assembly 100 is installed in cup 12 of hole 11, in some embodiments the view axes 125 of the plurality of cameras 122 of upper camera assembly 120a may each be generally parallel or aligned with the horizontal direction (e.g., such that an angle between the view axes 125 of the cameras 122 of upper camera assembly 120a and the radial and horizontal direction is zero or substantially zero). Thus, because the axis 15 of pole 10 may be generally aligned with the vertical direction, the view axes 125 of the cameras 122 of upper camera assembly 120a may be generally aligned with a radius or a radial direction extending from central axis 15. In addition, in some embodiments, the view axes 125 of the plurality of cameras 122 of middle camera assembly 120b may be positioned at an angle α extending vertically downward from the horizontal direction (or a radius of the axis 15) that may range from about 5° to about 10°. Further, in some embodiments, the view axes 125 of the plurality of cameras 122 of lower camera assembly 120c may be positioned at an angle β extending vertically downward from the horizontal direction (or a radius of the axis 15) that may be about 30° or more. Stated differently, the view axes 125 of the cameras 122 of upper camera assembly 120a may extend perpendicularly (e.g., 90°) to the central axis 15 of pole 10. In addition, the view axes 125 of the cameras 122 of middle camera assembly 120b may be positioned at an angle α' to the central axis 15 of pole 10 that may range from about 80° to about 85°. Further, the view axes 125 of the cameras 122 of the lower camera assembly 120c may be positioned at an angle β' to the central axis 15 of pole 10 that may be about 60° or less.

Thus, the view axes 125 of the plurality of cameras 122 of the upper camera assembly 120a may be positioned at a smaller angle relative to the horizontal direction than view axes 125 of the cameras 122 of both the middle camera assembly 120b and the lower camera assembly 120c. In addition, the view axes 125 of the plurality of cameras 122 of the middle camera assembly 120b may be positioned at a smaller angle (e.g., the angle α) than the view axes 125 of the plurality of cameras 122 of the lower camera assembly 120c (which are positioned at the larger angle β as previously described). Further, the angle α may be less than the angle β, and the angle α' may be greater than the angle β', and the angles α, α', β, and β' may all be less than the angle between the axes 125 of the cameras 122 of upper camera assembly 120a and the central axis 15 of pole 10. Moreover, the angles α, α', β, and β' may all be less than 90° and greater than 0° so that the angles α, α', β, and β' are all acute angles.

The different alignments of the cameras 122 of the upper camera assembly 120a, middle camera assembly 120b, and lower camera assembly 120c described above may allow the cameras 122 of the upper camera assembly 120a, middle camera assembly 120b, and lower camera assembly 120c to capture images of regions or areas that are at different distances extending outward (e.g., horizontally outward or radially outward with respect to axis 15) from central pole 10. For instance, the cameras 122 of the upper camera assembly 120a may be configured to capture images of regions or areas that are radially spaced as far as about 91.4 m to about 137.2 m (about 100 to about 150 yards) from the pole 10 (e.g., with respect to central axis 15). In addition, the cameras 122 of the middle camera assembly 120b may be configured to capture images of regions or areas that are radially spaced from about 6.1 m to about 137.2 m (about 20 feet to about 150 yards) from central pole 10 (with respect to central axis 15). Further, the cameras 122 of the lower camera assembly 120c may be configured to capture images of regions or areas that are radially spaced from about 0 m to about 15.2 m (about 0 to about 50 feet) from central pole 10 (with respect to central axis 15).

During operations, the cameras 122 of the upper camera assembly 120a, middle camera assembly 120b, and lower camera assembly 120c may be configured to capture images of different actions or different golf shot types. For instance, the cameras 122 of the upper camera assembly 120a may be configured to capture images of a golfer's approach shot into the green (e.g., whereby the golfer is intending to land the golf ball on the surface of green 4 from the fairway or other off-green location). The cameras 122 of the middle camera assembly 120b may be configured to capture images of a golfer's chip or short pitch shot onto the green (e.g., whereby the golfer is intending to land the golf ball on the green 4 from an area or region that is generally immediately adjacent the green 4). The cameras 122 of the lower camera assembly 120c may be configured to capture images of a golfer's putt (e.g., whereby the golfer is intending to roll the ball along the green toward, or ideally into, the hole 11). The focal lengths of the cameras 122 of the upper camera assembly 120a, middle camera assembly 120b, and lower camera assembly 120c (e.g., the focal lengths along the corresponding view axis 125) may be selected so as to focus on objects, persons, etc. positioned within the regions or areas associated with the above-noted golf shot types (and at the radial distances described above). In some embodiments, the focal lengths of cameras 122 of upper camera assembly 120a, middle camera assembly 120b, and lower camera assembly 120c may be adjustable.

Referring again to FIG. 1, flagstick camera assembly 100 may also include one or more sources of electrical power for operating the upper camera 110 and/or the other camera assemblies 120a, 120b, 120c (or other electrical components of flagstick camera assembly 100). For instance, in some embodiments, flagstick camera assembly 100 may comprise one or more batteries 140 that may be positioned within central pole 10 that are coupled to the upper camera 110 and/or camera assemblies 120a, 120b, 120c.

In addition (or in the alternative), in some embodiments, flagstick camera assembly 100 may comprise one or more solar power generators 150 coupled to an outer surface of the central pole 10 (and/or to the camera 110, camera assemblies 120a, 120b, 120c, etc.). Solar power generator 150 (or each solar power generator 150) may comprise photovoltaic cells that are configured to absorb solar radiation and generate electric current. In some embodiments, the photovoltaic cells of solar power generator 150 may be coupled to a flexible membrane that may be wrapped or conformed along the outer surface of pole 10 during operations. For embodiments that utilize batteries 140 and solar power generator(s) 150, the electrical power generated by solar power generators 150 may be provided to batteries 140 so as to allow charging of batteries 140 during operations.

In some embodiments, flagstick camera assembly 100 may include, or be coupled to, a wind turbine that is configured to generate electric current. For instance, the wind turbine (not shown) may be mounted to pole 10 or may be distally mounted from pole 10 (e.g., off and away from the green 4).

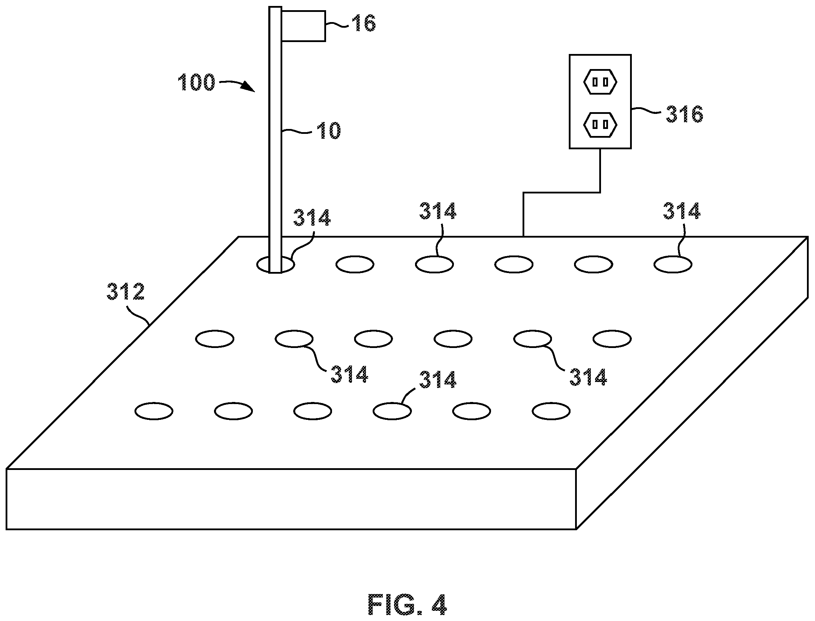

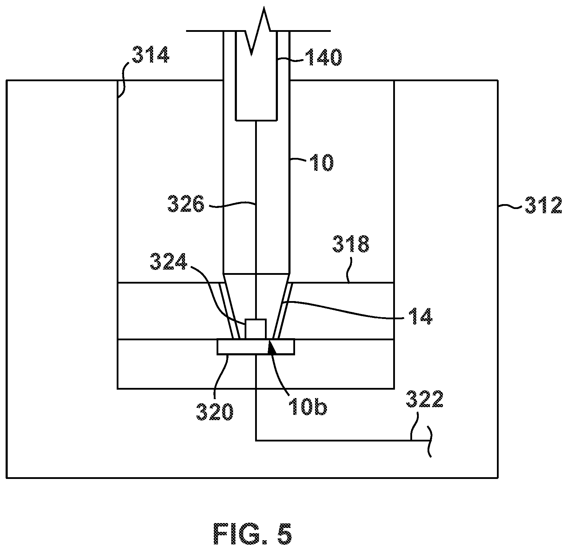

Referring now to FIGS. 4 and 5, some embodiments may comprise a charging station 300 that may charge a power source (e.g., batteries 140) of the flagstick camera assembly 100 (FIG. 1). In some embodiments, charging station 300 may comprise a base 312 having a plurality of holes 314 extending therein. In some embodiments, the base 312 may comprise a single hole 314 for charging one flagstick camera assembly 100. In the embodiment of FIG. 4, the base 312 may comprise a plurality of holes 314 for charging a plurality of flagstick camera assemblies 100. For instance, in some embodiments there is a total of eighteen (18) holes 314, such that charging station 300 may charge (e.g., simultaneously, sequentially), eighteen flagstick camera assemblies 100 that may be utilized to film golf activities on a standard eighteen-hole golf course. In some embodiments, the total number of holes 314 in base 312 may less than or greater than eighteen (18), such as, for instance, nine (9), twenty-seven (27), thirty six (36), etc.

As shown in FIG. 5, each hole 314 may comprise a cup 318 that may be similar to cup 12 in hole 11 on a green 4 as shown in FIG. 1. However, cup 318 may comprise or be coupled to a conductive member 320 that is to contact a corresponding conductive member 324 on or coupled to flagstick camera assembly 100 during a power charging operation. For instance, when pole 10 of flagstick camera assembly 100 is inserted within hole 314, the stab connector 14 may engage with cup 318 (or an aperture defined therein) such that a conductive member 324 (which may be positioned along or on bottom end 10b of pole 10, within stab connector 14) may contact conductive member 320. Conductive member 320 may be further coupled to a source of electrical power, such as, for instance, the outlet plug 316 schematically shown in FIG. 4, via a conductor 322 (e.g., a metallic wire). In addition, conductive member 324 may be coupled (e.g., directly or indirectly) to the batteries 140 positioned within pole 10 via a conductor (e.g., a metallic wire) that are shown in FIG. 1. Thus, when conductive members 324, 320 are brought into contact with one another, electrical current may flow from conductive member 320 to conductive member 324, and thereafter may be provided to the battery(ies) 140 positioned within the pole 10 via conductor 326 such that battery(ies) 140 may be charged.

In some embodiments, a charging station (e.g., charging station 300) may be installed on or adjacent to each green 4 of a golf course. During play, a player, caddie, or other individual may remove the flagstick camera assembly 100 from the hole 11 while players are putting and may insert the flagstick camera assembly 100 into a hole (e.g., hole 314) defined in the charging station (not shown) to allow charging of the battery(ies) 140 within pole 10. Following putting, the player, caddie, or other individual may then remove the flagstick camera assembly 100 and re-insert it in to the hole 11 on the green 4 for the next group of golfers.

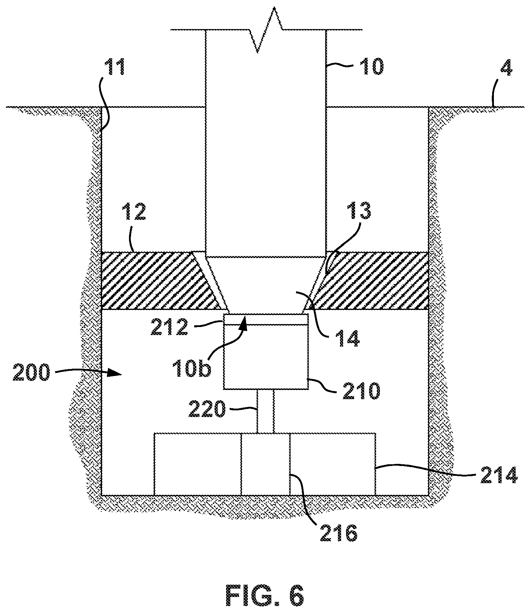

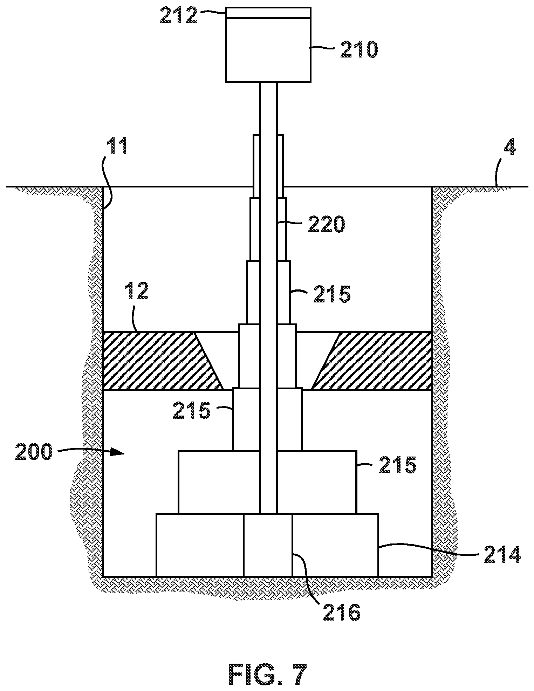

Referring now to FIGS. 6 and 7, in some embodiments, a camera assembly 200 may be mounted within the hole 11 on green 4 that is independent and separate from the flagstick camera assembly 100 previously described. Camera assembly 200 may be positioned within hole 11, below the cup 12, and may comprise a base 214 and a camera 210 coupled to and extendable from base 214 out of the hole 11 (FIG. 7). In some embodiments, the camera assembly 200 may be integrally formed with cup 12 such that camera assembly 200 may be described as being part of the cup 12 that is configured to be inserted within the hole 11 on the green 4.

An actuator 216 (e.g., a linear actuator) is positioned within base 214 and coupled to camera 210 via a shaft 220. In some embodiments, actuator 216 may comprise an electric actuator (e.g., an electric motor, such as a stepper motor), a hydraulic actuator (e.g., a hydraulic piston or cylinder), a pneumatic actuator (e.g., a pneumatic cylinder), etc. During operations, actuator 216 may actuate camera 210 between a first or collapsed position shown in FIG. 6 and a second or extended position shown in FIG. 7. In the collapsed position (FIG. 6), the camera 210 is positioned below cup 12 and therefore concealed within hole 11, and in the extended position (FIG. 7), the camera 210 is extended by actuator 216 from base 214 and through aperture 13 in cup 12 so as to expose camera 210 out of hole 11. As shown in FIG. 7, when the camera 210 is in the extended position, the shaft 220 may be covered (e.g., partially covered, totally covered) by a segmented cover 215 that telescopes outward (e.g., upward) from base 214. Without being limited to this or any other theory, the segmented cover 215 may protect shaft 220 from debris or impact (e.g., such as from a golf ball) during operations.

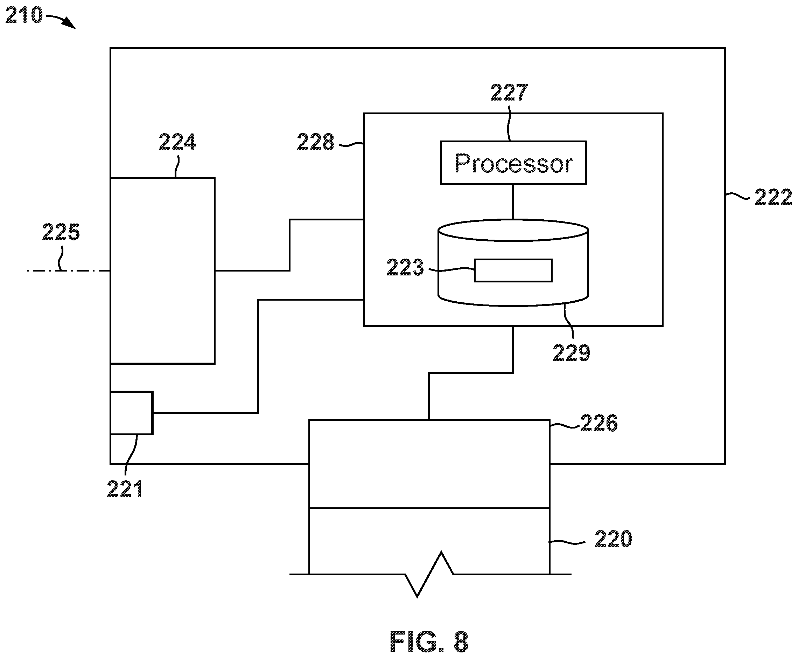

A pressure sensor 212 may be positioned atop camera 210. During operations, the actuator 216 may transition the camera 210 between the collapsed position (FIG. 6) and the extended position (FIG. 7) based (e.g., at least in part) on an output signal from the pressure sensor 212. Specifically, during operations, when pole 10 is inserted within hole 11, the stab connector 14 may be engaged within aperture 13 of cup 12 so that lower end 10b is engaged or abutted with pressure sensor 212, and the resulting output signal from the pressure sensor 212 may cause the actuator 216 to maintain the camera 210 in the collapsed position (FIG. 6). However, when the stab connector 14 is withdrawn from aperture of cup 12 (e.g., such as when pole 10 is removed from hole 11 before a putt is attempted), contact between the stab connector 14 (e.g., and therefore lower end 106) and pressure sensor 212 is ceased, and a resulting output signal from the pressure sensor 212 may cause the actuator 216 to transition the camera 210 from the collapsed position (FIG. 6) to the extended position (FIG. 7). In some embodiments, a controller (e.g., the controller 228 of camera 210 described in more detail below and shown in FIG. 8), may receive the signals from pressure sensor 212, and based on these received signals, cause the actuator 216 to transition the camera 210 between the collapsed position (FIG. 6) and extended position (FIG. 7) accordingly.

The camera 210 may be configured similarly to the upper camera 110 coupled to pole 10, such that camera 210 may be moved to capture images omnidirectionally about shaft 220 and hole 11 during operations (e.g., such as when the camera 210 is in the extended position of FIG. 7).

Specifically, referring now to FIG. 8, in some embodiments, camera 210 comprises a housing 222, an image sensor assembly 224 supported by housing 222, an actuator 226 coupled to housing 222, and a controller 228 positioned within housing 222 (and/or base 214) and coupled to image sensor assembly 224 and actuator 226. The image sensor assembly 224 may comprise a view axis 225 and may be similar to the image sensor assembly 114 and view axis 115 previously described above for upper camera 110.

Actuator 226 is configured similarly to actuator 116, previously described, for upper camera 110. Thus, actuator 226 is configured to move image sensor assembly 224 such that camera 210 may capture images omnidirectionally about the shaft 220. The controller 228 may be similar to the controller 118, previously described, and thus controller 228 may comprise a processor 227 and a memory 229 (having machine-readable instructions 223 stored thereon) that are similar to the processor 117 and memory 119, previously described.

Controller 228 may be coupled to image sensor assembly 224 and to actuator 226. Thus, during operations, controller 228 may cause actuator 226 to move housing 222 and image sensor assembly 224 as previously described above so as to capture images omnidirectionally about shaft 220. For instance, in some embodiments, processor 228 may move image sensor assembly 224 to maintain an object within the field of view. Specifically, the controller 228 may recognize an object in the images captured by the image sensor assembly 224. For instance, controller 228 may recognize a golf ball (e.g., using a machine learning model as previously described) rolling along the surface of the green 4 within the image(s) captured by image sensor assembly 224 and may then cause actuator 226 to move housing 222 so as to place and maintain the object within the field of view (e.g., at or near the center of the field of view so that a projection of axis 225 intersects with the object) of the image sensor assembly 224. Accordingly, camera 210 may be configured to automatically track a moving object during operations.

In addition, camera 210 may also determine a distance between an object (e.g., such as a golf ball rolling the green 4) and the camera 210. Specifically, controller 228 may analyze the images captured by image sensor assembly 224 to determine a distance between the camera 210 and the object of interest (e.g., a golf ball). Controller 228 may utilize any suitable technique to determine the distance to the object of interest in various embodiments. For instance, controller 228 may estimate the distance based on a comparison of the relative size of the option in the image captured by image sensor assembly 224 and a known size or dimension for the object (e.g., such as the known size or dimension of a golf ball). In addition, controller 228 may estimate the distance based on a comparison of multiple objects within the image captured by the image sensor assembly 224 (including the object of interest). In some embodiments, camera 210 may comprise a proximity sensor 221 (e.g., time of flight sensor) that is coupled to controller 128 and is configured to measure a distance between the camera 210 and the object of interest (and communicate the measured distance or a value indicative thereof to the controller 228).

Regardless of the specific technique utilized, during operations, controller 228 may monitor the distance between an object, such as a golf ball rolling on the green 4 and the camera 210. If the distance falls within a designated value (e.g., such as 0.61 m, 0.30 m, 20.3 cm, 10.2 cm (2 feet, 1 foot, 8 inches, 4 inches), etc.), the controller 228 may cause the actuator 216 to transition the camera 210 from the extended position (FIG. 7) back to the collapsed position (FIG. 6).

Thus, referring now to FIGS. 6-8, during operations when a golfer (or golfer(s)) has entered the green and removed the pole 10 from hole 11 prior to attempting a putt, the controller 228 may actuate the camera 210 from the collapsed position (FIG. 6) to the extended position (FIG. 7) so that camera 210 is exposed out of the hole 11 via shaft 220 and actuator 216 as previously described. Thereafter, controller 228 may move camera 210 on shaft 220 to determine the location(s) of any golf balls located on the green 4. Specifically, the controller 228 may cause actuator 226 to move camera 210 about shaft 220 while causing image sensor assembly 224 to capture images. The controller 228 may analyze the images to determine where golf balls are located along the green 4. In some embodiments, controller 228 may utilize a machine learning model (e.g., a neural network, logistic regression model, classification model, etc.) to recognize a golf ball (or multiple golf balls) in the images captured by image sensor assembly 224.

Once the controller 228 determines the locations of golf balls on the green 4 (e.g., via the images captured by image sensor assembly 224), the controller 228 may then cause actuator 226 to point the view axis 225 toward the detected golf ball (or one of the detected golf balls) (e.g., such that the detected golf ball is at or near the center of images captured by the image sensor assembly 224). In some situations, multiple golf balls may be present on the green 4 (e.g., such as when multiple golfers are playing the same hole). Thus, in some embodiments, the controller 228 may detect the presence of multiple golf balls on the green 4 and then determine which golf ball to align the view axis 225 of image sensor assembly 224 with first. For instance, according to the rules of golf, the ball that is located farthest (e.g., based on a linear distance extending horizontally from the hole 11 to the golf ball) from the hole 11 (as compared to the other golf balls). Thus, in some embodiments, when multiple golf balls are detected on the green 4 by controller 228, the controller 228 may cause actuator 226 to move camera 210 to the golf ball that is located farthest from camera 210. Controller 228 may determine the distance to the detected golf balls any of the techniques previously described above.

After controller 228 causes actuator 226 to move to the golf ball (or the selected golf ball as previously described), the golfer may then attempt to putt the golf ball into the hole 11. As the golf ball rolls along green 4, toward the hole 11, the controller 228 may capture images (e.g., video), and continuously or periodically determine the distance between the golf ball and the hole 11. Assuming that the golf ball is well putt, the ball will eventually come within a proximity of the hole 11 that is less than the designated distance value previously described above. Because camera 210 is extended out of the hole 11, the camera 210 may become an obstruction that may prevent the golf ball from falling into the hole 11. As a result, when the controller 228 determines that the putted golf ball is within the designated distance value, the controller 228 may cause the actuator 216 to transition the camera 210 from the extended position (FIG. 7) back to the collapsed position (FIG. 6). As the camera 210 is transitioning back to the collapsed position (FIG. 6), the controller 228 may continue to align the image sensor assembly 224 with the golf ball (e.g., via the actuator 226) such that images of the golf ball falling into the hole 11 may be captured. Once the camera 210 is fully transitioned to the collapsed position (FIG. 6), the golf ball (now also in the hole 11) may (in some embodiments) contact the pressure sensor 212 such that camera 210 is maintained in the collapsed position until the golfer retrieves the ball from the hole 11 thereby causing camera 210 to transition back to the extended position (FIG. 7) in the manner described above (e.g., due to disengagement of the golf ball and pressure sensor 212). Thereafter, the controller 228 may then cause camera 210 to capture images of another golf ball to be putt toward the hole as previously described.

Once the golfer(s) have completed playing the golf hole, the pole 10 may be reinserted into the hole 11. During this process, the camera 210 may be in the extended position (FIG. 7) and reinsertion of the central pole 10 may then cause stab connector 14 to engage with pressure sensor 212. The resulting signal from pressure sensor 212 may be communicated to controller 228 which may then, in response, cause the camera 210 to transition from the extended position (FIG. 7) back to the collapsed position (FIG. 6). Accordingly, following reinsertion of the pole 10 into hole 11, the camera 210 may be repositioned and ready for the next golfer or golfer(s).

In some embodiments, the shaft 220 and camera 210 may be configured and positioned relative to hole 11 such that they do not present an obstruction that would prevent a putted golf ball from rolling into the hole (e.g., the shaft 220 and camera 210 may provide no more of an obstruction than a flag pole inserted within the hole 11). In these embodiments, the controller 228 may maintain the camera 210 in the extended position (FIG. 7) even as the putted golf ball falls into the hole 11.

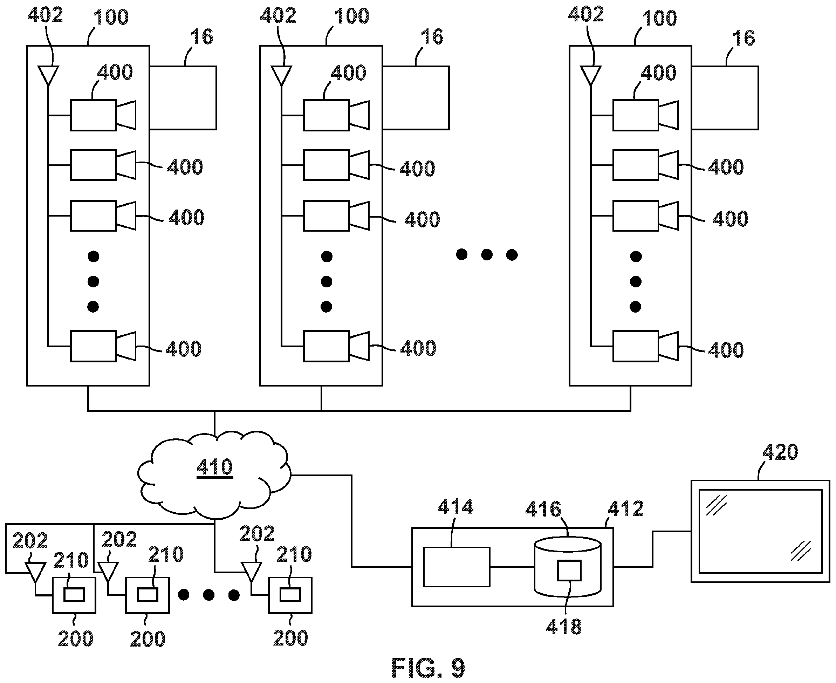

Referring now to FIG. 9, in some embodiments a golf course may install embodiments of flagstick camera assemblies 100 in the various holes to film golf activities (e.g., as either part of regular play or during a tournament). As previously described, the flagstick camera assemblies 100 may each comprise a plurality of cameras 400 (which may comprise the upper cameras 110 and/or the cameras 122 of camera assemblies 120a, 120b, 120c as previously described). In addition, flagstick camera assemblies 100 may each include or be coupled to a corresponding antenna 402 that is configured to communicate with an electronic device 412 over a network 410.

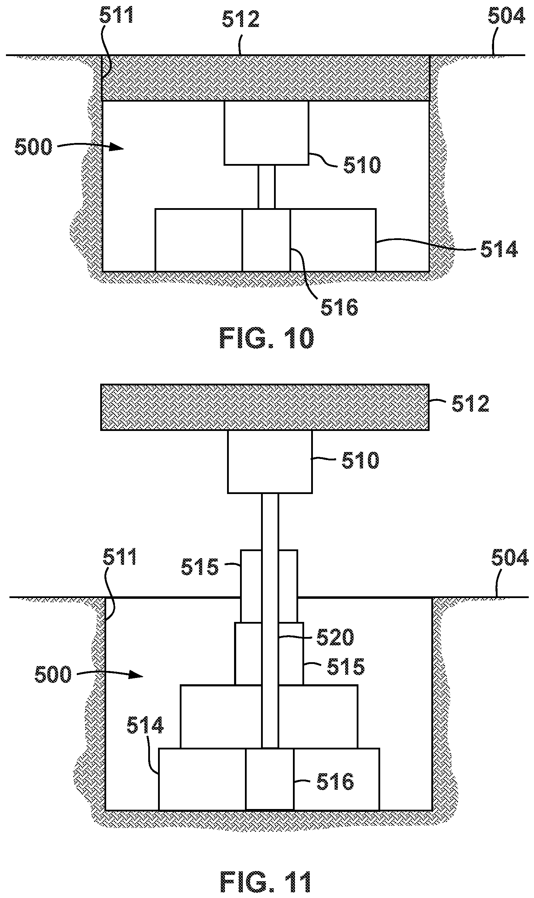

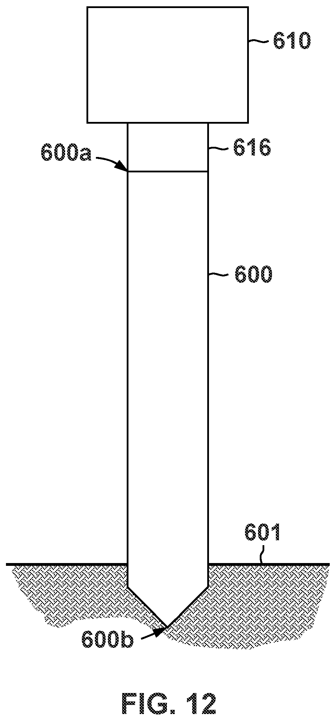

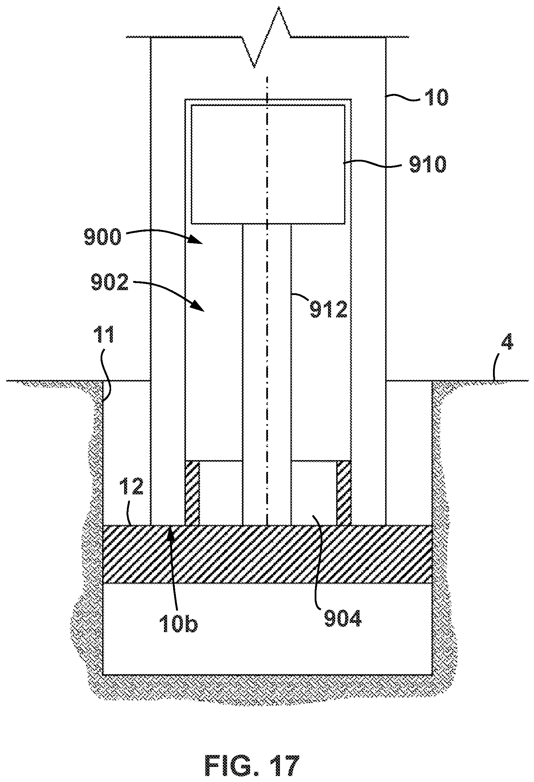

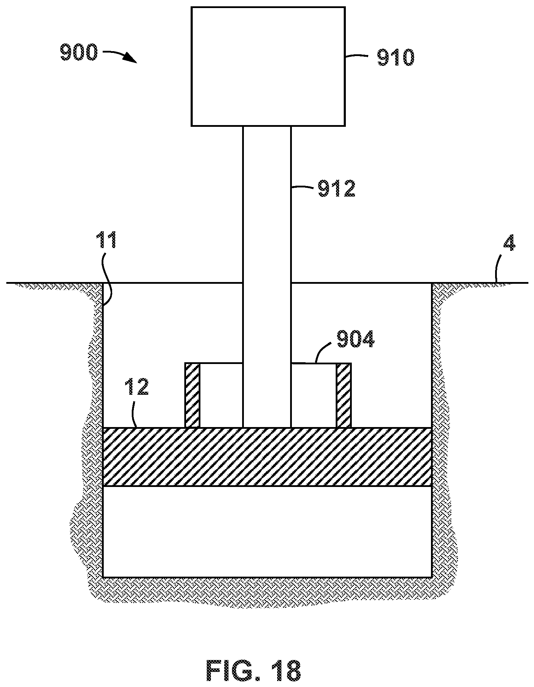

Further, additional cameras or camera assemblies may also be positioned throughout the golf course and communicatively coupled to the electronic device 412, For instance, in some embodiments, camera assemblies 200 (FIGS. 6-8) are installed within one or more of the holes (e.g., holes 11) that are also configured to communicate with electronic device 412. Specifically, camera assemblies 200 may include or be coupled to antennas 202 that are configured to communicate with electronic device 412 via network 410. In some embodiments, one or more cameras or camera assemblies may be positioned in other locations of the golf course and also communicatively coupled to electronic device 412 (e.g., camera assemblies 500 shown in FIGS. 10 and 11, camera 610 coupled to hazard marker 600 shown in FIG. 12, camera assembly 900 shown in FIGS. 17 and 18, etc.).

The electronic device 412 may comprise a computer, such as a personal computer (e.g., desktop computer, laptop computer, tablet computer, etc.), a smartphone, a server, or any other suitable device that is configured to carry out machine-readable instructions (e.g., machine-readable instructions 418). Generally speaking, electronic device 412 may comprise a processor 414 that executes machine-readable instructions 418 on memory 416. The processor 414 and memory 416 may be similar to the processor 117 and memory 119 previously described above (and thus a particular description of these components is not repeated in the interests of brevity).

The network 410 may comprise any suitable wireless network, such as a WLAN, WWAN, the Internet, a WiFi network, telecommunications network, etc. During operations, electronic device 412 may communicate with flagstick camera assemblies 100 and/or camera assemblies 200 via network 410. For instance, images captured by cameras 400, 210 may be communicated to electronic device 412 via network 410. The electronic device 412 may output images to a suitable output device, such as an electronic display (e.g., liquid crystal display (LCD), organic light emitting diode (OLED) display, plasma display, etc.). The electronic display 420 may be integrated with or coupled to the electronic device 412.

Thus, during operations, a user may view images captured by the cameras 400 on the electronic display 420 via the electronic device 412. Specifically, a user may select to view images from a particular one of the flagstick camera assemblies 100 (e.g., such as the flagstick camera assembly 100 positioned on a particular hole), and/or may select to view images from a particular camera 400 or cameras 400 on the flagstick camera assemblies 100.

In some embodiments, a user may cause one or more cameras that are communicatively coupled to electronic device 412 (e.g., cameras 400, 210) to move. Specifically, a user may provide commands to electronic device 412 (e.g., directly or via another electronic device), that are then communicated to a selected flagstick assembly 100 or camera assembly 200 or other communicatively coupled camera or camera assembly via network 410. Upon receipt of the commands via antenna 402, the selected camera (e.g., camera 400, 210) may be moved (e.g., via a suitable controller and/or actuator) to point the camera 400 in the desired direction. For instance, these techniques may be used to controllably move the upper camera 110 (FIG. 1) of a selected flagstick camera assembly 100 to allow a user (who may be remotely located from the flagstick camera assembly 100) to view a particular portion of the golf hole, green, etc. Without being limited to this or any other theory, allowing a remotely located user to controllably move a camera may facilitate security (e.g., by allowing viewing of the golf course to monitor for trespassers, vandals, wild animals, etc.) and/or management (e.g., by allowing a marshal or similar individual to monitor pace of play and to ensure that golfers are practicing proper golf course etiquette and care) of a golf course. Further, allowing a remotely located user to controllably move a camera may also facilitate filming of a golf event (e.g., such as a tournament) taking place on a golf course (e.g., by allowing a user to selectively move a camera 400 on a flagstick camera assembly 100 to capture a particular act of interest). Still further, the cameras of the embodiments disclosed herein may also be used to capture events occurring during the round of golf or score verification (e.g., hole-in-one verification, longest putt or drive verification, images for lessons or instructional videos).

As mentioned above, additional cameras may be placed throughout a golf course, in addition to or in lieu of the cameras on the flagstick camera assembly 100 and the camera assembly 200 in the hole 11. For instance, referring now to FIGS. 10 and 11, a camera assembly 500 is shown.

Camera assembly 500 may be positioned in a separate hole or receptacle 511 in the ground 504 that is separate from the hole 11 on the green 4 (see e.g., FIGS. 6 and 7). Specifically, in some embodiments the hole 511 may be placed on the green 4, but separate from the hole 11. In some embodiments, the hole 511 may be placed in a location on the golf course that is separate from the green 4 (which may be referred to herein as an "off-green location"), such as, for instance, a tee box, a fairway, the rough, etc. In some embodiments, a golf hole (or a plurality of golf holes on a golf course) may comprise a plurality of camera assemblies 500 positioned in a plurality of holes 511 dispersed in various locations about the golf hole (e.g., including any one or more of the examples provided above). In some embodiments, the camera assemblies 500 may be communicatively coupled with one another and/or with other camera assemblies also positioned on the golf hole (e.g., such as flagstick camera assembly 100 of FIG. 1 and/or camera assembly 200 of FIGS. 6 and 7). In addition, in some embodiments, the camera assemblies 500 may be communicatively coupled to a central electronic device (e.g., such as electronic device 412 shown in FIG. 9 and described above).

Camera assembly 500 includes a base 514, and a camera 510 that extendable from base 514 out of the hole 511 on a shaft 520 via an actuator 516. The camera 510, base 514, shaft 520, and actuator 516 may be similarly configured as the camera 210, base 214, shaft 220, and actuator 216, respectively, previously described above for camera assembly 200. Thus, a detailed description of these features is not repeated herein for purposes of brevity and conciseness.

During operations, actuator 516 may actuate camera 510 between a first or collapsed position shown in FIG. 10 and a second or extended position shown in FIG. 11. In the collapsed position (FIG. 10), the camera 510 is positioned within hole 511, and in the extended position (FIG. 11), the camera 510 is extended by actuator 516 from base 514 on shaft 520 so as to expose camera 510 out of hole 511. When the camera 510 is in the extended position (FIG. 11) the shaft 520 may be covered (e.g., partially covered, totally covered) by a segmented cover 515 that telescopes outward (e.g., upward) from base 514 and that is similar to segmented cover 214 previously described.

A cap 512 may be positioned on top of camera 510 so that when camera 510 is in the collapsed position (FIG. 10), the cap 512 may cover hole 511. In some embodiments, when the camera 510 is in the extended position (FIG. 11), the cap 512 may be extended upward, along with the camera 510, from hole 511. In some embodiments, the cap 512 may comprise natural or synthetic turf, or another material (e.g., metal, wood, a polymer, an elastomer, etc.).

The embodiment of FIGS. 10 and 11 is not part of the claimed invention unless used in combination with a golf flagstick camera assembly comprising all features of claim 1 or in a method comprising all features of claim 8.

During operations, the camera 510 may be transitioned from the collapsed position (FIG. 10) to the extended position (FIG. 11) when a golfer (or golfers) are within a proximity of the camera 510. For instance, a golfer may hold (or otherwise possess) an emitter (not shown) that emits a suitable radio frequency signal that is detected by a suitable antenna coupled to or integrated with the camera assembly 500. The emitter may comprise any suitable device, such as a fob, ball mark, coin, smartphone, etc. In some embodiments, the signal emitted by the emitter may be specific to a particular golfer or group of golfers, such that the camera assembly 500 (or a controller communicatively coupled thereto) may determine which particular golfer or group of golfers is being filmed by the camera 510 during operations. A similar emitter may also be used in some embodiments to initiate recording using the flagstick camera assembly 100 and/or the camera assembly 200.

In some embodiments, a camera assembly 500 may communicate (e.g., wirelessly or via wired communication) with other camera assemblies 500 and/or flagstick camera assembly 100 and camera assembly 200. As a result, in some embodiments, a camera assembly 500 may trigger other camera assemblies (e.g., camera assemblies 500, 100, 200) to record images. Thus, during operations, a golfer or group of golfers may approach a tee box for a hole of golf. A camera assembly 500 positioned on or proximate to the tee box may detect the presence of the golfer(s) via the radio frequency emitter as previously described, and may then transition to the extended position (FIG. 11) and initiate a recording of a tee shot (or tee shots). Thereafter the camera assembly 500 may communicate with other camera assemblies on the golf hole (e.g., cameras assemblies 500, 200, 100) to initiate recording of further images using these camera assemblies so as to capture a plurality of images from multiple camera assemblies positioned along the golf hole. In addition, in some embodiments, a camera assembly 500 (or plurality of camera assemblies 500) may also communicate with electronic device 412 via network 410 (FIG. 9) in a similar manner to that described above for flagstick camera assemblies 100 and camera assemblies 200.

In some embodiments, a golfer may cancel the capturing of images using a suitable device, such as the emitter previously described above. For instance, a golfer may cause the emitter to initiate a cancellation signal to stop a camera assembly (e.g., camera assemblies 500, 100, 200) from capturing images. The emitter may comprise a button that may be depressed by the golfer to initiate the cancellation signal in some embodiments. In some embodiments, when the emitter comprises a smartphone, the user may make an appropriate selection (e.g., via a user interface) to initiate the cancellation signal.

In some embodiments, the camera 510 of the camera assembly 500 (or an additional camera coupled to the camera assembly 500 in addition to the camera 510) may be configured to track the flight of a golf ball off the tee or within the fairway of a golf course. In some embodiments, the camera 510 (or again, an additional camera coupled to the camera assembly in addition to the camera 510) may include (or be coupled to) a controller (e.g., controller 118) that is configured (e.g., via machine-readable instructions that are executed by a processor) to identify a particular player that is captured in images obtained by the camera 510. In some embodiments, the camera 510 may be configured to identify the player captured in the images via communication with an emitter (previously described) carried by or with the player. In addition, the camera 510 may also be configured to track the ball flight based on one or more parameters associated with the player (e.g., swing speed, style, club choice, handicap, etc.). The one or more parameters associated with the player may be saved in a player profile that is saved in a memory (e.g., memory 229, 416, etc.). In some embodiments, the camera 510 may be configured to track the ball flight using one or more machine learning models that utilize the one or more parameters associated with the player as an input.

The embodiments described with reference to hazard markers, stakes, or other devices used to designate edges of hazard areas or boundaries are not part of the claimed invention.

In some embodiments a camera (or cameras) may be coupled to or incorporated within hazard markers, stakes, or other devices used to designate edges of hazard areas (e.g., water traps, waste areas) or boundaries (e.g., out-of-bounds markers) to capture images of golf balls leaving the playable areas of the golf course. For instance, the cameras on or coupled to the hazard markers may be used to determine a precise location where the ball cross the hazard line during play (e.g., such as for purposes of a broadcast of a professional golf tournament).

For example, reference is now made to FIG. 12, which shows a camera 610 coupled to a hazard marker 600 that is embedded into the ground 601 along, adjacent, or proximate to a golf course hazard area. The hazard marker 600 comprises an elongate stake that includes a first or upper end 600a and a second or lower end 600b opposite upper end 600a. The lower end 600b may be inserted (e.g., embedded) within the ground 601, and the upper end 600a may be projected upward from the ground 601. The camera 610 may be coupled to the upper end 600a of the hazard marker 600 via an actuator 616. The camera 610 and actuator 616 may be similarly configured as the camera 210 and actuator 216, respectively, as previously described above for the camera assembly 200 (FIGS. 6-8). Thus, a detailed description of these features is not repeated herein for purposes of brevity and conciseness. During operations, the camera 610 may be pivoted omnidirectionally relative to the hazard marker 600, via actuator 616, to capture images of a ball or balls that cross or move close to a hazard line on the golf course.

In some embodiments, the camera attached to the hazard marker (e.g., camera 610 shown in FIG. 12) may be a fixed view camera (e.g., relative to the hazard marker 600). For instance, in some embodiments, one or more cameras similar to the camera assemblies 120a, 120b, 120c for flagstick camera assembly 100 may be coupled to or incorporated within the hazard marker 600 to capture images of golf balls along or near the golf course hazard as previously described.

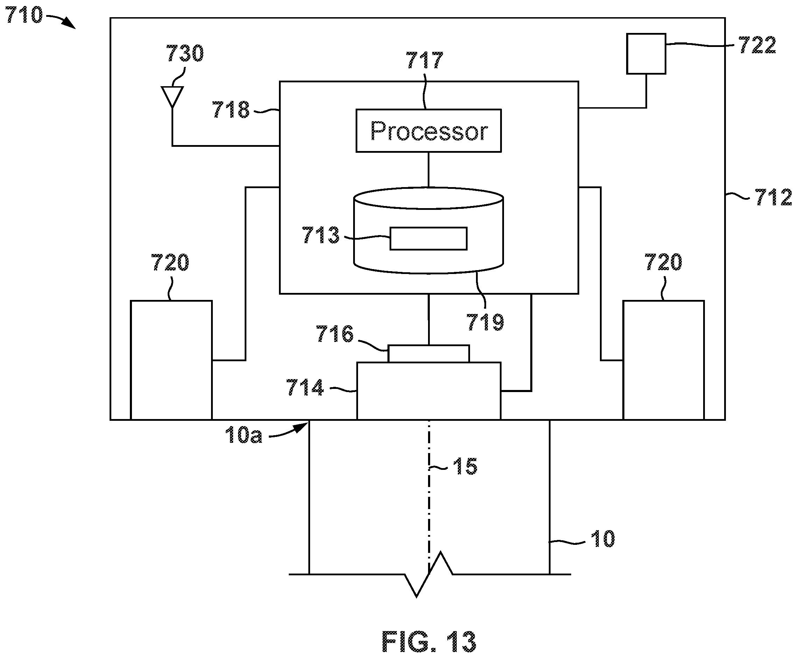

In some embodiments, the upper camera 110 may be replaced with a drone-based camera system. For instance, referring now to FIG. 13, a drone camera assembly 710 is coupled to upper end 10a of pole 10. The drone camera assembly 710 comprises a housing 712, an image sensor assembly 714 supported by housing 712, an actuator 716 coupled to image sensor 714, and a controller 718 positioned within housing 712 and coupled to image sensor assembly 714 and actuator 716.

In addition, the drone camera assembly 710 may include one or more (e.g., a plurality of) thrusters 720 that are configured to generate thrust sufficient to aerially elevate and maneuver the housing 712 above the green (e.g., green 4 shown in FIG. 1) during operations. For instance, the thrusters 720 may comprise fans that are rotated to generate a downward forward; however, any suitable type or design of thruster may be used in various embodiments. The thrusters 720 may be coupled to the controller 718.

The controller 718 includes a processor 717 and a memory 719 that stores machine-readable instructions 713. The processor 717 and memory 719 may be substantially the same as the processor 117 and memory 119 previously described above for the upper camera 110. Likewise, the machine-readable instructions 713 may be executed by the processor 717 to provide controller 718 and more broadly drone camera assembly 710 with all of the functionality described herein.

During operations, the controller 718 may actuate the thrusters 720 so as to cause the housing 712 to take off and separate vertically from upper end 10a of pole 10. The drone camera assembly 710 may then hover above (e.g., at about 7.6 m (about 25 feet) in some embodiments) the green 4 and capture images of players putting via the image sensor 714. The controller 718 may make adjustments to the thrusters 720 and/or the actuator 716 so as to cause the image sensor 714 to track balls and/or players as they move about the green during putting. For instance, the controller 718 may utilize suitable tracking techniques to maintain a desired object (e.g., a golf ball) or person in the camera view during operations via movements of the thrusters 720 and/or actuator 716. Once play on the green 4 has ceased, the drone camera assembly 718 may return and land back on the upper end 10a of pole 10 so that a next group of golfers may be filmed. The actuator 716 may be configured to move the camera 714 in a plurality of directions (e.g., in a similar manner to that described above for actuator 114).

In some embodiments, the drone camera assembly 710 may include one or more sensors 722 (e.g., gyroscopes, accelerometers, etc.) that may detect a vertical movement (e.g., vertically upward) of the housing 710, such as when a player or caddie removes the flagstick from the hole. The controller 718 may be coupled to the sensor(s) 722 (which may be referred to herein as "movement sensor(s)") and may, in response to detection of the vertical movement of the housing 710 associated with removal of the pole 10 from the hole (e.g., hole 11), actuate the thrusters 720 such that the drone camera assembly 710 takes off and hovers about the green 4 as previously described.

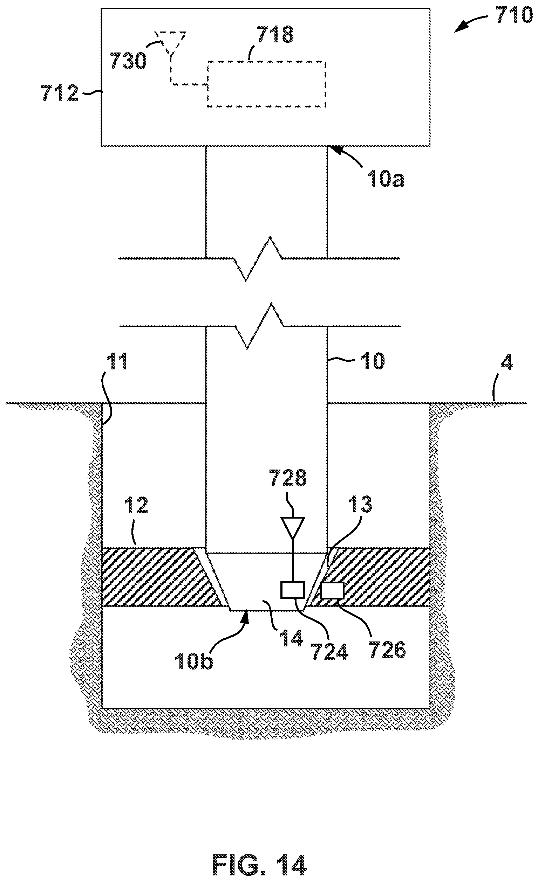

In some embodiments, the pole 10 may include a sensor (or sensors) that detects whether the pole 10 is inserted within the cup 12 of the hole 11. For instance, referring now to FIGS. 13 and 14, a suitable sensor 724 (e.g., pressure sensor, an electrical contact sensor, magnetic sensor such as a Hall-Effect sensor, etc.) may be coupled to the pole 10 (e.g., such as within or on the stab connector 14) that is configured to detect when the stab connector (e.g., stab connector 14) is positioned or seated within the cup 12 of the hole 11 (e.g., such as following cessation of putting play on the green 4). For instance, in some embodiments, the sensor 724 may comprise a Hall-Effect sensor that detects a magnetic field associated with the cup 12 or some part thereof (e.g., in the case that the cup 12 comprises or is coupled to a ferro metallic material). Upon detecting the magnetic field associated with the cup 12 (or component coupled thereto), the sensor 724 may output a suitable signal indicating that the pole 10 is installed in the hole 11.

In some embodiments, the sensor 724 may be configured to detect the presence of a corresponding sensor or tag 726 coupled to (or incorporated in) the cup 12. For instance, in some embodiments, the tag 726 comprises a radio frequency identification (RFID) tag, and the sensor 724 comprise a suitable transponder (e.g., emitter, and/or receiver) that is configured to output a suitable interrogation signal that is received by the tag 726 and to subsequently receive the response signal generated by the tag 726. Upon receipt of the response signal, the sensor 724 may output a suitable signal indicating that the pole 10 is installed in the hole 11.

Regardless of the type or form of sensor 724, in some embodiments, the sensor 724 includes or is coupled (e.g., communicatively coupled) to an antenna 728. Thus, when the sensor 724 outputs the signal indicating that the pole 10 has been installed into cup 12, the antenna 728 may emit the signal (or another signal based upon the output signal from sensor 724). The emitted signal from the antenna 728 may then be received by a corresponding antenna 730 coupled to controller 718 of drone camera assembly 710. In some embodiments, when controller 718 receives the signal via antenna 730 indicating that the pole 10 has been inserted into cup 12 (e.g., such as at the cessation of play on the green 4), the controller 718 may, in response, make adjustments to the thrusters 720 to land the drone camera assembly 710 at the upper end 10a of flagstick (e.g., such as shown in FIG. 13). The antennas 728, 730 may utilize any suitable wireless communication technique (e.g., radio frequency (RF), WiFi, IR communication, acoustic communication, optical communication, etc.).

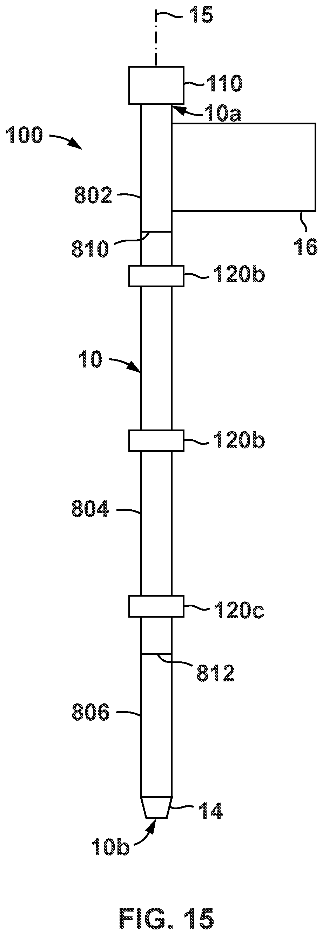

In some embodiments, the pole 10 of the flagstick camera assembly 100 shown in FIG. 1 may comprise a plurality of elongate sections or sub-assemblies that are releasably coupled to one another. For instance, referring now to FIG. 15, in some embodiments, the pole 10 may comprise a first or upper section 802 extending from upper end 10a along axis 15, a second or lower section 806 extending axially from lower end 10b, and a third or middle section 804 extending axially between the upper section 802 and lower section 806 along axis 15. The upper section 802 may include the upper end 10a, and the upper camera 110, the lower section 806 may include the lower end 10b and stab connector 14, and the middle section 804 may include the camera assemblies 120a, 120b, 120c.

The upper section 802 and middle section 804 may be coupled to one another at a first or upper connection 810, and the middle 804 section and lower section 806 may be coupled to one another at a second or lower connection 812. Thus, the upper connection 810 may be positioned axially between the lower connection 812 and the upper end 10a, and the lower connection 812 may be positioned axially between the upper connection 810 and the lower end 10b.

In some embodiments, the sections 802, 804, 806 may have equal axial lengths along axis 15. For instance, the total axial length of pole 10 from between ends 10a, 10b may be approximately 2.1 m (approximately seven feet (ft)). Thus, in some embodiments, each sections 802, 804, 806 may have an axial length of approximately 0.70 m (approximately 2.3 ft). In some embodiments, one or more of the sections 802, 804, 806 may have different axial lengths.

The upper connection 810 and lower connection 812 may comprise any suitable releasable connection such that the upper section 802, middle section 804, and lower section 806 may be readily separated from one another. For instance, in some embodiments, the upper connection 810 and/or the lower connection 812 may comprise threaded connections between the sections 802 and 804 and between sections 804, and 806, respectively.

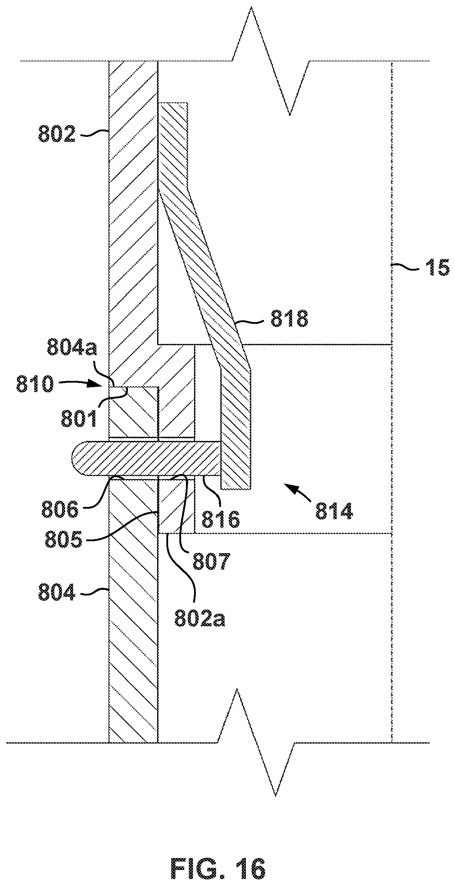

Referring now to FIG. 16, in some embodiments, a spring-loaded latch 814 may be utilized to releasable coupled the sections 802, 804, 806 to one another. FIG. 16 shows a spring-loaded latch 814 at the upper connection 810 between the upper section 802 and middle section 804, but it should be appreciated that the spring loaded latch 814 positioned at the lower connection 812 (FIG. 15) between the middle section 804 and lower section 806 may be configured the same.

As shown in FIG. 16, the upper section 802 may include a lower end 802a and an annular shoulder 801 axially spaced from lower end 802a along axis 15, so that a smaller diameter skirt 805 may be formed on upper section 802 that extends axially from shoulder 801 to lower end 802a. Skirt 805 is received axially into the middle section 804 until an upper end 804 of middle section 804 engages or abuts with the annular shoulder 801. Upon engagement of the upper end 804a and annular shoulder 801 a pair of radially extending apertures or holes 806, 807 extending through the middle section 804 and skirt 805, respectively, may radially align with one another. A button 816 is biased radially outward through the aligned holes 806, 807 via a biasing member 818 to thereby secure the upper section 802 and middle section 804 to one another. The biasing member 818 may comprise any suitable member or device for biasing button 816 radially outward during operations. For instance, in some embodiments, biasing member 818 may comprise a flat spring (e.g., a leaf spring).

To decoupled the sections 802, 804 from one another, a user may depress the button 816 radially inward against the bias provided by biasing member 818 until sections 802, 804 may be shifted axially apart from one another along axis 15. Without being limited to this or any other theory, by constructing pole 10 of flagstick camera assembly 100 from a plurality of sections, disassembly for transportation, repair, or replacement of the flagstick camera assembly 100 or part thereof may be more easily accomplished.

In some embodiments, a camera assembly may be concealed within the pole 10 such that the camera assembly is revealed or uncovered when the flagstick is removed from the hole 11 during play. For instance, referring now to FIG. 17, a camera assembly 900 is shown inserted within pole 10 according to some embodiments. The pole 10 may include any one or more (or none) of the upper camera 110 or camera assemblies 120a, 120b, 120c previously described above. Specifically, in the embodiment shown in FIGS 17, the pole 10 includes an axially extending recess 902 extending axially from lower end 10b along axis 15. When pole 10 is inserted within the hole 11, an axially extending skirt 904 coupled to (or integral with) the cup 12 is received into the recess 902 to secure the pole 10 within hole 11. A camera assembly 900 is coupled to cup 12 and extends axially upward from the skirt 904 into the recess 902 when the pole 10 is installed within the hole 11 as shown. The camera assembly 900 includes a camera 910 mounted on an axially extending shaft 912 that extends axially upward from cup 12, within skirt 904. The camera 910 may be a movable camera, such as is described above for cameras 110, 210, or a fixed camera, such as is described above for the camera assemblies 120a, 120b, 120c.

In some embodiments, the camera 910 may be similarly configured to the camera 210 of camera assembly 200, previously described (FIGS. 6 and 7). Thus, during operations, camera 910 may be pivoted omnidirectionally relative to shaft 912 to capture images of the area surrounding the hole 11 (e.g., the green 4). Thus, the camera 910 may include (or be coupled to) a suitable actuator (e.g., actuator 226) that is configured to move the camera 910 omnidirectionally during operations.

Referring now to FIGS. 17 and 18, during operations, when a player (or group) has reached the green and is preparing to putt, the pole 10 may be removed from hole 11, which thereby exposes the camera assembly 910 (FIG. 18). The camera 910 may then, in some embodiments, actuate to locate one or more golf balls on the green and track the movement of the golf balls during putting in the manner previously described above (e.g., such as is described above for camera 210). The shaft 912 may be relatively slim or thin, such that the shaft 912 does not interfere with the entrance or exit of golf balls from the hole 11 during play. Upon cessation of play on the green 4 (e.g., when putting is completed), the pole 10 may be reinserted into the hole 11 such that the camera assembly 900 is once again received into the recess 902 as shown in FIG. 17.

In some embodiments, the camera assembly 900 may include (or be coupled to) a suitable sensor or sensors that determine that the pole 10 has been removed from the hole 11 so as to cause the camera 910 to actuate to locate and/or track golf balls on the green 4. For instance, a pressure sensor may be installed within the hole 11 (e.g., on or in the cup 12 that is to detect the pressure of the pole 10 when it is installed within the hole 11 (FIG. 17). In some embodiments, camera 900 may include (or be coupled to a light sensor (e.g., a photoelectric sensor) may detect an increase in light around the camera assembly 900 when the pole 10 is removed from hole 11 so that the camera assembly 900 is exposed to the outer, sunlit, environment.

The embodiment in which the camera assembly 900 is enclosed within a chamber within the pole 10 and exposed by decoupling sections of the pole is not part of the claimed invention unless it is used in combination with a golf flagstick camera assembly comprising all features of claim 1 or in a method comprising all features of claim 13.

In some embodiments, the camera assembly 900 may be enclosed within a chamber within the pole 10 so that a user may expose the camera assembly 900 by decoupling a pair of sections of the pole 10 from one another. For instance, the camera assembly 900 may be mounted to a lower section of the pole 10 that may remain within the hole 11 when a user removes and upper section of the pole 10. The sections of pole 10 may be coupled to one another with any suitable mechanism (e.g., spring-loaded connector, J-slot connector, etc.).

While embodiments disclosed herein have included cameras (e.g., cameras 110, 122, 210, 510, 710,910) that are configured to capture images, it should be appreciated that in some embodiments one or more (e.g., all) of the cameras and related assemblies (e.g., flagstick camera assembly 100, camera assemblies 200, 900, etc.) may include or be coupled to microphones or other suitable devices that are configured to capture sound. Thus, during operations, the sound may be captured and communicated along with the images captured by the embodiments of cameras described herein so that a more complete record of the events captured thereby may be obtained.

As described above, embodiments disclosed herein include golf flagstick camera assemblies according to the appended claims for capturing activities on and/or around the green of a hole of golf. In some embodiments, the camera assemblies disclosed herein may be mounted to the flagstick that is inserted within the hole on a green of a hole of a golf course. Thus, through use of the golf flagstick camera assemblies disclosed herein, activities on the green of a hole of golf may be captured from multiple angles to facilitate an enhanced viewing experience (e.g., either via a broadcast of a golf event on television, or as a private video collection).

While exemplary embodiments have been shown and described, modifications thereof can be made by one skilled in the art within the scope of the appending claims. The embodiments described herein are exemplary only. Many variations and modifications of the systems, apparatus, and processes described herein are possible and are within the scope of the appending claims. Accordingly, the scope of protection is only limited by the claims that follow. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

## Claims

1. A golf flagstick camera assembly (100), comprising:
a pole (10) having a central axis (15), a first end (10a), and a second end (10b) opposite the first end (10a) along the central axis (15); and
a plurality of camera assemblies coupled to the pole, wherein the plurality of camera assemblies comprises:
a first camera assembly (120b) and a second camera assembly (120c) axially spaced from one another along the central axis (15); and
a third camera assembly (120a) coupled to the pole (10) and axially spaced between the first camera assembly (120b) and the first end (10a);
wherein the third camera assembly (120a) comprises a set of cameras (122) that each have a viewing axis that extends perpendicularly to the central axis (15);
wherein the first camera assembly (120b) comprises a set of cameras (122) that each have a viewing axis that is positioned at an acute angle α to the central axis;
wherein the second camera assembly (120c) comprises a set of cameras (122) that each have a viewing axis that is positioned at an acute angle β to the central axis (15); and
wherein the acute angle α is greater than the acute angle β;
**characterized in that** the golf flagstick assembly (100) further comprises an upper camera assembly (710) coupled to the first end (10a) of the pole (10), wherein the upper camera assembly (710) comprises a drone that is configured to separate from the first end (10a) of the pole (10) and hover above a golf course.

2. The golf flagstick camera assembly of claim 1, wherein the pole includes a stab connector (14) at the second end that is configured to engage with a cup (12) in a hole (11) on the golf course, and wherein the second camera assembly is axially spaced between the first camera assembly and the second end along the central axis.

3. The golf flagstick camera assembly of claim 2, wherein the set of cameras of the first camera assembly are uniformly spaced about the central axis of the pole, and wherein the set of cameras of the second camera assembly are uniformly spaced about the central axis of the pole.

4. The golf flagstick camera assembly of claim 3, wherein the upper camera assembly comprises a camera configured to track a golf ball on the golf course.

5. The golf flagstick camera assembly of claim 1, further comprising a sensor (724) coupled to the pole that is configured to detect an insertion of the second end of the pole into a hole on a green of the golf course, wherein the drone is configured to land on the first end of the pole in response to the sensor (724) detecting an insertion of the pole into the hole.

6. The golf flagstick camera assembly of claim 1, further comprising a sensor (722) coupled to the drone, the sensor being configured to detect a vertical movement when coupled to the first end of the pole, wherein the drone is configured to separate from the first end of the pole in response to the sensor (722) detecting the vertical movement.

7. The golf flagstick camera assembly of claim 1, further comprising:
a cup (12) that is configured to be inserted within a hole on a golf course; and
a fourth camera assembly (900) including a camera (910) mounted on a shaft (912) that is connected to the cup (12) such that the fourth camera assembly (900) is configured to protrude from the hole when the cup is installed in the hole;
wherein the fourth camera assembly (900) is configured to be received in a recess (902) of the pole that extends from the second end, when the pole is inserted into the hole to engage the cup.

8. A method of capturing images of play on a golf course, the method comprising:
(a) inserting a golf flagstick camera assembly (100) into a hole on a green of the golf course, the golf flagstick camera assembly (100) comprising:
a pole (10);
a first camera assembly (120b), a second camera assembly (120c), and a third camera assembly (120a) axially spaced from one another along the pole (10);
wherein the first camera assembly (120b) comprises a set of cameras (122) that each have a viewing axis that is positioned at an acute angle α to a central axis (15) of the pole (10);
wherein the second camera assembly (120c) comprises a set of cameras (122) that each have a viewing axis that is positioned at an acute angle β to the central axis (15), the acute angle α being greater than the acute angle β, and
wherein the third camera assembly (120a) comprises a set of cameras (122) that each have a viewing axis that extends perpendicularly to the central axis (15); and
(b) capturing images with at least one of the first camera assembly (120b), the second camera assembly (120c), or the third camera assembly (120a), after (a);
**characterized by**:
(c) separating an upper camera assembly (710) from an upper end (10a) of the pole (10), wherein the upper camera assembly (710) comprises a drone;
(d) hovering the upper camera assembly (710) above the green; and
(e) capturing images of play on the golf course with the upper camera assembly (710).

9. The method of claim 8, further comprising (f) positioning a fourth camera assembly in the hole on the green, wherein the hole comprises a cup (12) that is configured to engage with the pole of the golf flagstick camera assembly.

10. The method of claim 9, further comprising:
(g) detecting that the golf flagstick camera assembly is inserted within the hole with a sensor (212) coupled to the fourth camera assembly;
(h) detecting that the golf flagstick camera assembly is withdrawn from the hole after (g) with the sensor (212); and
(i) extending a camera of the fourth camera assembly out of the hole in response to the detecting in (h).

11. The method of claim 10, wherein the sensor comprises a pressure sensor, wherein (g) comprises engaging the golf flagstick camera assembly with the pressure sensor, and wherein (h) comprises disengaging the golf flagstick camera assembly from the pressure sensor.

12. The method of claim 11, wherein (i) comprises extending the camera of the fourth camera assembly out of the hole on a shaft and moving the camera of the fourth camera assembly omnidirectionally relative to the shaft.

13. The method of claim 8, further comprising:
(j) positioning a fifth camera assembly at least partially into the hole before (a), wherein the fifth camera assembly includes a camera mounted on a shaft so that the camera of the fifth camera assembly extends out of the hole, wherein (a) further comprises receiving the camera of the fifth camera assembly into a recess extending into a lower end (10b) of the pole (10) during (a); and
(k) removing the pole from the hole to expose the camera of the fifth camera assembly.

14. The method of claim 8, wherein the upper camera assembly comprises an actuator (716) and a controller (718), wherein the controller includes a processor (717) and a memory (719), wherein the memory (719) includes machine-readable instructions (713), that when executed by the processor (717), cause the controller (718) to track a golf ball using a camera of the upper camera assembly.

15. The method of claim 8, further comprising:
(l) detecting an insertion of the pole into the hole; and
(m) landing the drone on the upper end of the pole in response to said detection of the insertion of said pole into said hole (l).

## Patentansprüche

1. Golf-Flaggenstock-Kameraanordnung (100), Folgendes umfassend:
einen Pfahl (10), der eine Mittelachse (15), ein erstes Ende (10a) und ein zweites Ende (10b) gegenüber dem ersten Ende (10a) entlang der Mittelachse (15) aufweist; und
eine Vielzahl von Kameraanordnungen, die mit dem Pfahl gekoppelt ist, wobei die Vielzahl von Kameraanordnungen Folgendes umfasst:
eine erste Kameraanordnung (120b) und eine zweite Kameraanordnung (120c), die axial entlang der Mittelachse (15) voneinander beabstandet sind; und
eine dritte Kameraanordnung (120a), die mit dem Pfahl (10) gekoppelt und axial zwischen der ersten Kameraanordnung (120b) und dem ersten Ende (10a) beabstandet ist;
wobei die dritte Kameraanordnung (120a) einen Satz von Kameras (122) umfasst, die jeweils eine Sichtachse aufweisen, die sich senkrecht zu der Mittelachse (15) erstreckt;
wobei die erste Kameraanordnung (120b) einen Satz von Kameras (122) umfasst, die jeweils eine Sichtachse aufweisen, die in einem spitzen Winkel α zu der Mittelachse positioniert ist;
wobei die zweite Kameraanordnung (120c) einen Satz von Kameras (122) umfasst, die jeweils eine Sichtachse aufweisen, die in einem spitzen Winkel β zu der Mittelachse (15) positioniert ist; und
wobei der spitze Winkel α größer als der spitze Winkel β ist;
**dadurch gekennzeichnet, dass** die Golf-Flaggenstock-Anordnung (100) ferner eine obere Kameraanordnung (710) umfasst, die mit dem ersten Ende (10a) des Pfahls (10) gekoppelt ist, wobei die obere Kameraanordnung (710) eine Drohne umfasst, die konfiguriert ist, um sich von dem ersten Ende (10a) des Pfahls (10) zu lösen und über einem Golfplatz zu schweben.

2. Golf-Flaggenstock-Kameraanordnung nach Anspruch 1, wobei der Pfahl an dem zweiten Ende einen Steckverbinder (14) aufweist, der konfiguriert ist, um in einen Becher (12) in einem Loch (11) auf dem Golfplatz einzugreifen, und wobei die zweite Kameraanordnung entlang der Mittelachse axial zwischen der ersten Kameraanordnung und dem zweiten Ende beabstandet ist.

3. Golf-Flaggenstock-Kameraanordnung nach Anspruch 2, wobei der Satz von Kameras der ersten Kameraanordnung gleichmäßig um die Mittelachse des Pfahls beabstandet ist und wobei der Satz von Kameras der zweiten Kameraanordnung gleichmäßig um die Mittelachse des Pfahls beabstandet ist.

4. Golf-Flaggenstock-Kameraanordnung nach Anspruch 3, wobei die obere Kameraanordnung eine Kamera umfasst, die konfiguriert ist, um einen Golfball auf dem Golfplatz zu verfolgen.

5. Golf-Flaggenstock-Kameraanordnung nach Anspruch 1, ferner einen Sensor (724) umfassend, der mit dem Pfahl gekoppelt ist und konfiguriert ist, um das Einsetzen des zweiten Endes des Pfahls in ein Loch auf dem Grün des Golfplatzes zu erkennen, wobei die Drohne konfiguriert ist, um als Reaktion darauf, dass der Sensor (724) ein Einsetzen des Pfahls in das Loch erkennt, auf dem ersten Ende des Pfahls zu landen.

6. Golf-Flaggenstock-Kameraanordnung nach Anspruch 1, ferner einen Sensor (722) umfassend, der mit der Drohne gekoppelt ist, wobei der Sensor konfiguriert ist, um eine vertikale Bewegung zu erkennen, wenn er mit dem ersten Ende des Pfahls gekoppelt ist, wobei die Drohne konfiguriert ist, um sich als Reaktion darauf, dass der Sensor (722) die vertikale Bewegung erkennt, von dem ersten Ende des Pfahls zu lösen.

7. Golf-Flaggenstock-Kameraanordnung nach Anspruch 1, ferner Folgendes umfassend:
einen Becher (12), der konfiguriert ist, um in ein Loch auf einem Golfplatz eingesetzt zu werden; und
eine vierte Kameraanordnung (900), die eine Kamera (910) beinhaltet, die auf einer Welle (912) montiert ist, die mit dem Becher (12) verbunden ist, sodass die vierte Kameraanordnung (900) konfiguriert ist, aus dem Loch herauszuragen, wenn der Becher in dem Loch installiert ist;
wobei die vierte Kameraanordnung (900) konfiguriert ist, um in einer Aussparung (902) des Pfahls aufgenommen zu werden, die sich von dem zweiten Ende erstreckt, wenn der Pfosten in das Loch eingesetzt ist, um in den Becher einzugreifen.

8. Verfahren zum Aufnehmen von Bildern des Spiels auf einem Golfplatz, wobei das Verfahren Folgendes umfasst:
(a) Einsetzen einer Golf-Flaggenstock-Kameraanordnung (100) in ein Loch auf einem Grün des Golfplatzes, wobei die Golf-Flaggenstock-Kameraanordnung (100) Folgendes umfasst:
einen Pfahl (10);
eine erste Kameraanordnung (120b), eine zweite Kameraanordnung (120c) und eine dritte Kameraanordnung (120a), die entlang des Pfahls (10) axial voneinander beabstandet sind;
wobei die erste Kameraanordnung (120b) einen Satz von Kameras (122) umfasst, die jeweils eine Sichtachse aufweisen, die in einem spitzen Winkel α zu einer Mittelachse (15) des Pfahls (10) positioniert ist;
wobei die zweite Kameraanordnung (120c) einen Satz von Kameras (122) umfasst, die jeweils eine Sichtachse aufweisen, die in einem spitzen Winkel β zu der Mittelachse (15) positioniert ist, wobei der spitze Winkel α größer als der spitze Winkel β ist und
wobei die dritte Kameraanordnung (120a) einen Satz von Kameras (122) umfasst, die jeweils eine Sichtachse aufweisen, die sich senkrecht zu der Mittelachse (15) erstreckt; und
(b) Aufnehmen von Bildern mit mindestens einer von der ersten Kameraanordnung (120b), der zweiten Kameraanordnung (120c) oder der dritten Kameraanordnung (120a) nach (a);
**gekennzeichnet durch**:
(c) Trennen einer oberen Kameraanordnung (710) von einem oberen Ende (10a) des Pfahls (10), wobei die obere Kameraanordnung (710) eine Drohne umfasst;
(d) Schwebenlassen der oberen Kameraanordnung (710) über dem Grün; und
(e) Aufnehmen von Bildern des Spiels auf dem Golfplatz mit der oberen Kameraanordnung (710).

9. Verfahren nach Anspruch 8, ferner umfassend (f) Positionieren einer vierten Kameraanordnung in dem Loch auf dem Grün, wobei das Loch einen Becher (12) umfasst, der konfiguriert ist, um in den Pfahl der Golf-Flaggenstock-Kameraanordnung einzugreifen.

10. Verfahren nach Anspruch 9, ferner Folgendes umfassend:
(9) Erkennen, dass die Golf-Flaggenstock-Kameraanordnung in das Loch eingesetzt ist, mit einem Sensor (212), der mit der vierten Kameraanordnung gekoppelt ist;
(h) Erkennen, dass die Golf-Flaggenstock-Kameraanordnung nach (g) aus dem Loch zurückgezogen wurde, mit dem Sensor (212); und
(i) Ausfahren einer Kamera der vierten Kameraanordnung aus dem Loch als Reaktion auf das Erkennen in (h).

11. Verfahren nach Anspruch 10, wobei der Sensor einen Drucksensor umfasst, wobei (g) ein Eingreifen der Golf-Flaggenstock-Kameraanordnung in den Drucksensor umfasst und wobei (h) ein Lösen der Golf-Flaggenstock-Kameraanordnung von dem Drucksensor umfasst.

12. Verfahren nach Anspruch 11, wobei (i) ein Ausfahren der Kamera der vierten Kameraanordnung aus dem Loch an einer Welle und ein omnidirektionales Bewegen der Kamera der vierten Kameraanordnung relativ zu der Welle umfasst.

13. Verfahren nach Anspruch 8, ferner Folgendes umfassend:
(j) Positionieren einer fünften Kameraanordnung mindestens teilweise in dem Loch vor (a), wobei die fünfte Kameraanordnung eine auf einer Welle montierte Kamera beinhaltet, sodass die Kamera der fünften Kameraanordnung aus dem Loch herausragt, wobei (a) ferner ein Aufnehmen der Kamera der fünften Kameraanordnung in einer Aussparung, die sich in ein unteres Ende (10b) des Pfahls (10) erstreckt, während (a) umfasst; und
(k) Entfernen des Pfahls aus dem Loch, um die Kamera der fünften Kameraanordnung freizulegen.

14. Verfahren nach Anspruch 8, wobei die obere Kameraanordnung einen Aktuator (716) und eine Steuerung (718) umfasst, wobei die Steuerung einen Prozessor (717) und einen Speicher (719) beinhaltet, wobei der Speicher (719) maschinenlesbare Anweisungen (713) beinhaltet, die, wenn sie durch den Prozessor (717) ausgeführt werden, die Steuerung (718) veranlassen, einen Golfball unter Verwendung einer Kamera der oberen Kameraanordnung zu verfolgen.

15. Verfahren nach Anspruch 8, ferner Folgendes umfassend:
(l) Erkennen eines Einsetzens des Pfahls in das Loch; und
(m) Landen der Drohne auf dem oberen Ende des Pfahls als Reaktion auf das Erkennen des Einsetzens des Pfahls in das Loch (l).

## Revendications

1. Ensemble caméras de drapeau de golf (100), comprenant :
une perche (10) présentant un axe central (15), une première extrémité (10a) et une seconde extrémité (10b) opposée à la première extrémité (10a) le long de l'axe central (15) ; et
une pluralité d'ensembles caméras couplés à la perche, la pluralité d'ensembles caméras comprenant :
un premier ensemble caméras (120b) et un deuxième ensemble caméras (120c) espacés axialement l'un de l'autre le long de l'axe central (15) ; et
un troisième ensemble caméras (120a) couplé à la perche (10) et espacé axialement entre le premier ensemble caméras (120b) et la première extrémité (10a) ;
dans lequel le troisième ensemble caméras (120a) comprend un ensemble de caméras (122) dont chacune présente un axe de visée qui s'étend perpendiculairement à l'axe central (15) ;
dans lequel le premier ensemble caméras (120b) comprend un ensemble de caméras (122) dont chacune présente un axe de visée qui est positionné à un angle aigu α par rapport à l'axe central ;
dans lequel le deuxième ensemble caméras (120c) comprend un ensemble de caméras (122) dont chacune présente un axe de visée qui est positionné à un angle aigu β par rapport à l'axe central (15) ; et
dans lequel l'angle aigu α est supérieur à l'angle aigu β ;
**caractérisé en ce que** l'ensemble caméras de drapeau de golf (100) comprend en outre un ensemble caméra supérieur (710) couplé à la première extrémité (10a) de la perche (10), l'ensemble caméra supérieur (710) comprenant un drone qui est configuré pour se séparer de la première extrémité (10a) de la perche (10) et se maintenir en vol stationnaire au-dessus d'un parcours de golf.

2. Ensemble caméras de drapeau de golf de la revendication 1, dans lequel la perche comprend un connecteur de lame (14), au niveau de la seconde extrémité, configuré pour s'engager dans une coupe (12) située dans un trou (11) du parcours de golf, et dans lequel le deuxième ensemble caméras est espacé axialement entre le premier ensemble caméras et la seconde extrémité le long de l'axe central.

3. Ensemble caméras de drapeau de golf de la revendication 2, dans lequel l'ensemble de caméras du premier ensemble caméras sont espacées de manière uniforme autour de l'axe central de la perche, et dans lequel l'ensemble de caméras du deuxième ensemble caméras sont espacées de manière uniforme autour de l'axe central de la perche.

4. Ensemble caméras de drapeau de golf de la revendication 3, dans lequel l'ensemble caméra supérieur comprend une caméra configurée pour suivre une balle de golf sur le parcours de golf.

5. Ensemble caméras de drapeau de golf de la revendication 1, comprenant en outre un capteur (724) couplé à la perche, qui est configuré pour détecter l'insertion de la seconde extrémité de la perche dans un trou situé sur un green du parcours de golf, dans lequel le drone est configuré pour atterrir sur la première extrémité de la perche en réponse à la détection, par le capteur (724), de l'insertion de la perche dans le trou.

6. Ensemble caméras de drapeau de golf de la revendication 1, comprenant en outre un capteur (722) couplé au drone, le capteur étant configuré pour détecter un mouvement vertical lorsqu'il est couplé à la première extrémité de la perche, dans lequel le drone est configuré pour se séparer de la première extrémité de la perche en réponse à la détection, par le capteur (722), du mouvement vertical.

7. Ensemble caméras de drapeau de golf de la revendication 1, comprenant en outre :
une coupe (12) qui est configurée pour être insérée dans un trou sur un parcours de golf ; et
un quatrième ensemble caméra (900) comprenant une caméra (910) montée sur un arbre (912) qui est relié à la coupe (12) de sorte que le quatrième ensemble caméra (900) est configuré pour faire saillie hors du trou lorsque la coupe est installée dans le trou ;
dans lequel le quatrième ensemble caméra (900) est configuré pour être reçu dans un évidement (902) de la perche qui s'étend à partir de la seconde extrémité, lorsque la perche est insérée dans le trou pour s'engager dans la coupe.

8. Procédé de capture d'images de jeu sur un parcours de golf, le procédé comprenant :
(a) l'insertion d'un ensemble caméras de drapeau de golf (100) dans un trou situé sur un green du parcours de golf, l'ensemble caméras de drapeau de golf (100) comprenant :
une perche (10) ;
un premier ensemble caméras (120b), un deuxième ensemble caméras (120c) et un troisième ensemble caméras (120a) espacés axialement les uns des autres le long de la perche (10) ;
dans lequel le premier ensemble caméras (120b) comprend un ensemble de caméras (122) dont chacune présente un axe de visée qui est positionné à un angle aigu α par rapport à un axe central (15) de la perche (10) ;
dans lequel le deuxième ensemble caméras (120c) comprend un ensemble de caméras (122) dont chacune présente un axe de visée qui est positionné à un angle aigu β par rapport à l'axe central (15), l'angle aigu α étant supérieur à l'angle aigu β, et
dans lequel le troisième ensemble caméras (120a) comprend un ensemble de caméras (122) dont chacune présente un axe de visée qui s'étend perpendiculairement à l'axe central (15) ; et
(b) la capture d'images à l'aide d'au moins l'un parmi le premier ensemble caméras (120b), le deuxième ensemble caméras (120c) ou le troisième ensemble caméras (120a), après l'étape (a) ;
**caractérisé par** :
(c) la séparation d'un ensemble caméra supérieur (710) d'une extrémité supérieure (10a) de la perche (10), l'ensemble caméra supérieur (710) comprenant un drone ;
(d) le maintien en vol stationnaire de l'ensemble caméra supérieur (710) au-dessus du green ; et
(e) la capture d'images de jeu sur le parcours de golf à l'aide de l'ensemble caméra supérieur (710).

9. Procédé de la revendication 8, comprenant en outre l'étape (f) de positionnement d'un quatrième ensemble caméra dans le trou situé sur le green, le trou comprenant une coupe (12) qui est configurée pour s'engager dans la perche de l'ensemble caméras de drapeau de golf.

10. Procédé de la revendication 9, comprenant en outre :
(g) la détection de l'insertion de l'ensemble caméras de drapeau de golf dans le trou à l'aide d'un capteur (212) couplé au quatrième ensemble caméra ;
(h) la détection du retrait de l'ensemble caméras de drapeau de golf du trou après l'étape (g) à l'aide du capteur (212) ; et
(i) l'extension d'une caméra du quatrième ensemble caméra hors du trou en réponse à la détection à l'étape (h).

11. Procédé de la revendication 10, dans lequel le capteur comprend un capteur de pression, dans lequel l'étape (g) comprend l'engagement de l'ensemble caméras de drapeau de golf dans le capteur de pression, et dans lequel l'étape (h) comprend le dégagement de l'ensemble caméras de drapeau de golf du capteur de pression.

12. Procédé de la revendication 11, dans lequel l'étape (i) comprend l'extension de la caméra du quatrième ensemble caméra hors du trou le long d'un arbre et le déplacement de la caméra du quatrième ensemble caméra de manière omnidirectionnelle par rapport à l'arbre.

13. Procédé de la revendication 8, comprenant en outre :
(j) le positionnement d'un cinquième ensemble caméra au moins partiellement dans le trou avant l'étape (a), dans lequel le cinquième ensemble caméra comprend une caméra montée sur un arbre de sorte que la caméra du cinquième ensemble caméra s'étend hors du trou, dans lequel l'étape (a) comprend en outre la réception de la caméra du cinquième ensemble caméra dans un évidement s'étendant dans une extrémité inférieure (10b) de la perche (10) pendant l'étape (a) ; et
(k) le retrait de la perche du trou pour exposer la caméra du cinquième ensemble caméra.

14. Procédé de la revendication 8, dans lequel l'ensemble caméra supérieur comprend un actionneur (716) et un dispositif de commande (718), le dispositif de commande comprenant un processeur (717) et une mémoire (719), la mémoire (719) comprenant des instructions lisibles par machine (713) qui, lorsqu'elles sont exécutées par le processeur (717), amènent le dispositif de commande (718) à suivre une balle de golf à l'aide de la caméra de l'ensemble caméra supérieur.

15. Procédé de la revendication 8, comprenant en outre :
(l) la détection de l'insertion de la perche dans le trou ; et
(m) l'atterrissage du drone sur l'extrémité supérieure de la perche en réponse à ladite détection de l'insertion de ladite perche dans ledit trou (I).
